# EUROPEAN PATENT APPLICATION

(11) **EP 4 604 658 A1**
(43) Date of publication of application: **20.08.2025**
(21) Application number: 23884445.0
(22) Date of filing: 05.09.2023
(51) Int. Cl.: H04W 74/08, H04W 36/04

(54) **COMMUNICATION METHOD AND APPARATUS**

(30) Priority: 31.10.2022 CN 202211350983
(71) Applicant: Huawei Technologies Co., Ltd., Shenzhen, Guangdong 518129 (CN)
(72) Inventor: ZHU, Huiying, Shenzhen, Guangdong 518129 (CN); DONG, Pengpeng, Shenzhen, Guangdong 518129 (CN); ZHU, Yuanping, Shenzhen, Guangdong 518129 (CN); ZHU, Shichao, Shenzhen, Guangdong 518129 (CN); WU, Fangzhou, Shenzhen, Guangdong 518129 (CN)
(74) Representative: Goddar, Heinz J.
(86) International application number: PCT/CN2023/117001
(87) International publication number: WO 2024/093508

(57) **Abstract**

This application provides a communication method and apparatus, and relates to the field of communication technologies. The method includes: A first IAB node receives first information, where the first information includes a first random access resource; and a mobile terminal MT of the first IAB node sends a first random access request to a second IAB node on the first random access resource, where the first random access request is used by the MT of the first IAB node to request to access a distributed unit DU of the second IAB node, and the second IAB node is a child node of the first IAB node. In this way, a connection may be established between the MT of the first IAB node and the DU of the second IAB node, which is equivalent to adding a backhaul link between the first IAB node and the second IAB node, thereby improving reliability of a system in which the first IAB node and the second IAB node are located.

## Description

### CROSS-REFERENCE TO RELATED APPLICATIONS

This application claims priority to Chinese Patent Application No. 202211350983.2, filed with the China National Intellectual Property Administration on October 31, 2022 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

An integrated access backhaul (integrated access backhaul, IAB) system includes a terminal device, an IAB node, and a donor node (donor node). The IAB node may provide a wireless access service for the terminal device, and is connected to the donor node (donor node) through a backhaul link to transmit service data of a user. The IAB system includes the IAB node, so that the terminal device can communicate with the donor node through the IAB node. This helps improve a network capacity.

When a backhaul link between the IAB node and a parent node of the IAB node (which may also be referred to as an upstream IAB node of the IAB node) is exceptional, the terminal device possibly cannot successfully receive downlink data from the donor node or possibly cannot successfully send uplink data to the donor node. Consequently, communication reliability of the IAB system is low.

### SUMMARY

Embodiments of this application provide a communication method and apparatus, to improve communication reliability of an IAB system.

According to a first aspect, an embodiment of this application provides a communication method. The method may be performed by a first IAB node, or may be performed by a module (for example, a chip) having a function of the first IAB node. For ease of description, the following uses an example in which the first IAB node performs the method for description. The method includes: receiving first information, where the first information includes a first random access resource; and a mobile terminal MT of the first IAB node sends a first random access request to a second IAB node on the first random access resource, where the first random access request is used by the MT of the first IAB node to request to access a distributed unit DU of the second IAB node, and the second IAB node is a child node of the first IAB node.

In this embodiment of this application, a connection may be established between the MT of the first IAB node and the DU of the second IAB node, which is equivalent to adding a communication link between the first IAB node and the second IAB node. After quality of a backhaul link between the first IAB node and another IAB node deteriorates or interruption occurs, the MT of the first IAB node may transmit data through the connection established with the DU of the second IAB node. Therefore, the first IAB node does not need to frequently perform cell reselection or cell handover. This reduces or even avoids service interruption or a data packet loss and handover signaling procedure overheads, improves robustness of service transmission, and helps improve communication reliability of an IAB system. For example, if a backhaul link between the first IAB node and a parent node of the first IAB node is exceptional, the MT of the first IAB node may forward, through the DU of the second IAB node, data that needs to be sent to the parent node of the first IAB node. In this way, a data loss can be reduced or avoided, thereby improving communication reliability of an IAB system.

In a possible implementation, before that a mobile terminal MT of the first IAB node sends a first random access request to a second IAB node on the first random access resource, the method further includes: receiving a second random access request from the second IAB node on a second random access resource, where the second random access request is used by an MT of the second IAB node to request to access a DU of the first IAB node, and a time domain resource included in the second random access resource is different from a time domain resource included in the first random access resource. That the time domain resource included in the second random access resource is different from the time domain resource included in the first random access resource may include that the time domain resource included in the second random access resource and the time domain resource included in the first random access resource do not completely overlap, or do not overlap.

In the foregoing implementation, the MT of the second IAB node may also initiate a random access process to the DU of the first IAB node, which is equivalent to that there are two available communication links between the first IAB node and the second IAB node, and this also helps improve communication reliability of the IAB system. In addition, because the first random access resource is different from the second random access resource, a conflict between two random access processes (namely, a random access process corresponding to the first random access request and a random access process corresponding to the second random access request) is avoided. This helps improve success rates of the two random access processes.

In a possible implementation, before that a mobile terminal MT of the first IAB node sends a first random access request to a second IAB node on the first random access resource, the method further includes: determining that quality of communication between the first IAB node and the second IAB node meets a first condition; and/or determining that quality of communication between the first IAB node and a third IAB node meets a second condition, where the third IAB node is a parent node of the first IAB node.

In the foregoing implementation, the first IAB node may initiate the random access process to the DU of the second IAB node when determining that the quality of communication between the first IAB node and the second IAB node meets a specific condition (for example, relatively good). In this way, this helps improve a success rate of random access between the MT of the first IAB node and the DU of the second IAB node, and to some extent, ensures that communication quality of the communication link established between the MT of the first IAB node and the DU of the second IAB node is good. In addition, the first IAB node may also initiate the random access process to the DU of the second IAB node when determining that the quality of communication between the third IAB node and the first IAB node meets a specific condition (for example, relatively poor). This not only helps improve communication reliability of the IAB system, but also makes a possibility that the communication link established between the MT of the first IAB node and the DU of the second IAB node is used to forward data to be high, and this also helps improve utilization of resources of the IAB system.

In a possible implementation, the first condition includes: a first measurement result is greater than or equal to a first threshold, the first measurement result indicates communication quality of a communication link from the second IAB node to the first IAB node, and the first measurement result is a measurement result of the first IAB node; and/or a second measurement result is greater than or equal to a second threshold, the second measurement result indicates communication quality of a communication link from the first IAB node to the second IAB node, and the second measurement result is a measurement result of the second IAB node.

In the foregoing implementation, a plurality of possibilities of the first condition are provided, thereby enriching implementation forms of the first condition. In addition, the first condition indicates that the quality of communication between the first IAB node and the second IAB node is relatively good. This helps improve a success rate of establishing random access between the first IAB node and the second IAB node, and to some extent, ensures reliability of the communication link between the MT of the first IAB node and the DU of the second IAB node.

In a possible implementation, the second condition includes: a third measurement result is less than or equal to a third threshold, the third measurement result indicates communication quality of a communication link from the third IAB node to the first IAB node, and the third measurement result is a measurement result of the first IAB node; and/or a fourth measurement result is less than or equal to a fourth threshold, the fourth measurement result indicates communication quality of a communication link from the first IAB node to the third IAB node, and the fourth measurement result is a measurement result of the third IAB node; and/or a beam failure or a communication link fault between the first IAB node and the third IAB node.

In the foregoing implementation, a plurality of possibilities of the second condition are provided, thereby enriching implementation forms of the second condition. In addition, the second condition indicates that the quality of communication between the first IAB node and the third IAB node is relatively poor, so that the communication link between the MT of the first IAB node and the DU of the second IAB node can improve communication reliability of the IAB system, and a possibility that the communication link between the MT of the first IAB node and the DU of the second IAB node is used is high, to avoid or reduce a case in which the communication link between the MT of the first IAB node and the DU of the second IAB node is idle, and the resources of the IAB system are wasted.

In a possible implementation, the first information further includes one or more of the first threshold, the second threshold, the third threshold, and the fourth threshold.

In the foregoing implementation, the first information may include a plurality of pieces of information (for example, the first random access resource and the threshold). This helps reduce a quantity of times of interaction between the first IAB node and another device (for example, a network device or the second IAB node) in the IAB system.

In a possible implementation, before that a mobile terminal MT of the first IAB node sends a first random access request to a second IAB node on the first random access resource, the method further includes: receiving first indication information from the second IAB node, the third IAB node, or a network device, where the first indication information indicates the MT of the first IAB node to initiate random access to a child node of the first IAB node, the third IAB node is the parent node of the first IAB node, and the child node of the first IAB node includes the second IAB node; or determining that the DU of the first IAB node and the second IAB node have completed a random access process.

In the foregoing implementation, a plurality of conditions for triggering the MT of the first IAB node to send the first random access request to the second IAB node are provided. For example, the first IAB node receives the first indication information of the second IAB node, the third IAB node, or the network device, or the first IAB node determines that the DU of the first IAB node and the second IAB node have completed the random access process. In other words, the first IAB node sends the first random access request to the second IAB node only under a specific condition. This avoids a case in which the first IAB node wastes the resources of the IAB system to the second IAB node in an unnecessarily case, so that utilization of the resources of the IAB system is more reasonable. In addition, when determining that the DU of the first IAB node and the second IAB node have completed the random access process, the first IAB node may initiate the random access process to the DU of the second IAB node without an indication of another device. This helps the first IAB node be capable of initiating the random access process to the DU of the second IAB node in a more timely manner, and helps the MT of the first IAB node establish the connection to the DU of the second IAB node in a more timely manner, to improve communication reliability of the IAB system in a more timely manner.

In a possible implementation, before the receiving first indication information from the second IAB node, the third IAB node, or a network device, the method further includes: sending the first measurement result to the second IAB node, the third IAB node, or the network device, where the first measurement result indicates the communication quality of the communication link from the second IAB node to the first IAB node, and the first measurement result is the measurement result of the first IAB node; and/or sending the third measurement result to the second IAB node, the third IAB node, or the network device, where the third measurement result indicates the communication quality of the communication link from the third IAB node to the first IAB node, and the third measurement result is the measurement result of the first IAB node.

In the foregoing implementation, after determining the first measurement result and/or the third measurement result, the first IAB node may send the first measurement result to another device (for example, the second IAB node, the third IAB node, or the network device), so that the another device can determine whether the quality of communication between the first IAB node and the second IAB node meets the first condition. In this way, the first IAB node does not need to determine whether the first condition and/or the second condition are/is met. This helps reduce a processing amount of the first IAB node. In addition, the another device (for example, the second IAB node, the third IAB node, or the network device) may determine whether the connection is established between the MT of the first IAB node and the second IAB node based on a network status (for example, a network congestion status). This helps improve overall performance of the IAB system.

In a possible implementation, the first information is received by the first IAB node from the network device or the second IAB node.

In the foregoing implementation, several manners of receiving the first information by the first IAB node are provided. For example, the first IAB node may receive the first information from the network device, or receive the first information from the second IAB node. This enriches the manners of receiving the first information by the first IAB node. In addition, the network device or the second IAB node determines the first random access resource, so that the network device or the second IAB node can determine the first random access resource, the second random access resource, and the like more reasonably, thereby helping avoid a conflict between the first random access resource and the second random access resource.

In a possible implementation, the first information is carried in configuration information of the MT of the first IAB node or higher layer signaling.

In the foregoing implementation, for example, if the first IAB node receives the first information from the network device, the first information may be carried in the configuration information of the MT of the first IAB node or the higher layer signaling, so that the network device may reuse the configuration information of the MT of the first IAB node or the higher layer signaling to send the first information. This reduces a quantity of times of interaction between the first IAB node and the network device.

In a possible implementation, the first information is carried in a first message, a third message, or a backhaul adaptation protocol control protocol data unit, and both the first message and the third message are messages in the random access process initiated by the MT of the second IAB node to the DU of the first IAB node.

In the foregoing implementation, for example, if the first IAB node receives the first information from the second IAB node, the first information may be carried in the first message, the third message, or the backhaul adaptation protocol control protocol data unit, so that the second IAB node may reuse the first message, the third message, or the backhaul adaptation protocol control protocol data unit to send the first information. This reduces the quantity of times of interaction between the first IAB node and the second IAB node. In addition, when the MT of the second IAB node initiates the random access process to the DU of the first IAB node, the first random access resource may be indicated by using the first message or the third message, so that the first IAB node can obtain the first random access resource in a more timely manner.

According to a second aspect, an embodiment of this application provides a communication method. The method may be performed by a second IAB node, or may be performed by a module (for example, a chip) having a function of the second IAB node. For ease of description, the following uses an example in which the second IAB node performs the method for description. The method includes: receiving a first random access request from a first IAB node on a first random access resource, where the first random access request is used by an MT of the first IAB node to request to access a DU of the second IAB node.

In a possible implementation, before the receiving a first random access request from a first IAB node on a first random access resource, the method further includes: sending first information to the first IAB node, where the first information includes the first random access resource, and the second IAB node is a child node of the first IAB node.

In a possible implementation, before the sending first information to the first IAB node, the method further includes: receiving second information from a network device or a fourth IAB node, where the second information includes the first random access resource, and the fourth IAB node is a parent node of the second IAB node. In the foregoing implementation, several manners of obtaining the first random access resource by the second IAB node are provided.

In a possible implementation, before the receiving a first random access request from a first IAB node on a first random access resource, the method further includes: receiving third information, where the third information includes a second random access resource; and receiving a second random access request from the first IAB node on the second random access resource, where a time domain resource included in the second random access resource is different from a time domain resource included in the first random access resource.

In a possible implementation, before the receiving a first random access request from a first IAB node on a first random access resource, the method further includes: sending first indication information to the first IAB node, where the first indication information indicates the MT of the first IAB node to initiate random access to the second IAB node.

In a possible implementation, before the receiving a first random access request from a first IAB node on a first random access resource, the method further includes: determining that quality of communication between the first IAB node and the second IAB node meets a first condition; and/or determining that quality of communication between the first IAB node and a third IAB node meets a second condition, where the third IAB node is a parent node of the first IAB node.

In a possible implementation, the first condition includes: a first measurement result is greater than or equal to a first threshold, the first measurement result indicates communication quality of a communication link from the second IAB node to the first IAB node, and the first measurement result is a measurement result of the first IAB node; and/or a second measurement result is greater than or equal to a second threshold, the second measurement result indicates communication quality of a communication link from the first IAB node to the second IAB node, and the second measurement result is a measurement result of the second IAB node.

In a possible implementation, the second condition includes: a third measurement result is less than or equal to a third threshold, the third measurement result indicates communication quality of a communication link from the third IAB node to the first IAB node, and the third measurement result is a measurement result of the first IAB node; and/or a fourth measurement result is less than or equal to a fourth threshold, the fourth measurement result indicates communication quality of a communication link from the first IAB node to the third IAB node, and the fourth measurement result is a measurement result of the third IAB node; and/or a beam failure or a communication link fault between the first IAB node and the third IAB node.

In a possible implementation, before the sending first indication information to the first IAB node, the method further includes: receiving second indication information from a third IAB node or the network device, where the second indication information indicates the DU of the second IAB node to establish a connection to a parent node of the second IAB node, the third IAB node is a parent node of the first IAB node, and the parent node of the second IAB node includes the first IAB node.

In a possible implementation, the first information is carried in a first message, a third message, or a backhaul adaptation protocol control protocol data unit, and both the first message and the third message are messages in a random access process initiated by the MT of the second IAB node to the DU of the first IAB node.

According to a third aspect, an embodiment of this application provides a communication method. The method may be performed by a network device, or may be performed by a module (for example, a chip) having a function of the network device. For ease of description, the following uses an example in which the network device performs the method for description. The method includes: sending first information to a first IAB node, where the first information includes a first random access resource, the first random access resource is used by an MT of the first IAB node to initiate random access to a DU of a second IAB node, and the second IAB node is a child node of the first IAB node; or sending second information to a second IAB node, where the second information includes a first random access resource, the first random access resource is used by a DU of the second IAB node to receive a first random access request from an MT of a first IAB node, and the second IAB node is a child node of the first IAB node.

In a possible implementation, the method further includes: sending first indication information to the first IAB node, where the first indication information indicates the MT of the first IAB node to initiate random access to a child node of the first IAB node, and the child node of the first IAB node includes the second IAB node.

In a possible implementation, before the sending first indication information to the first IAB node, the method further includes: determining that quality of communication between the first IAB node and the second IAB node meets a first condition; and/or determining that quality of communication between the first IAB node and a third IAB node meets a second condition, where the third IAB node is a parent node of the first IAB node.

In a possible implementation, the first condition includes: a first measurement result is greater than or equal to a first threshold, the first measurement result indicates communication quality of a communication link from the second IAB node to the first IAB node, and the first measurement result is a measurement result of the first IAB node; and/or a second measurement result is greater than or equal to a second threshold, the second measurement result indicates communication quality of a communication link from the first IAB node to the second IAB node, and the second measurement result is a measurement result of the second IAB node.

In a possible implementation, a third measurement result is less than or equal to a third threshold, the third measurement result indicates communication quality of a communication link from the third IAB node to the first IAB node, and the third measurement result is a measurement result of the first IAB node; and/or a fourth measurement result is less than or equal to a fourth threshold, the fourth measurement result indicates communication quality of a communication link from the first IAB node to the third IAB node, and the fourth measurement result is a measurement result of the third IAB node; and/or a beam failure or a communication link fault between the first IAB node and the third IAB node.

In a possible implementation, the first information is carried in configuration information of the MT of the first IAB node or higher layer signaling.

According to a fourth aspect, an embodiment of this application provides a communication apparatus. The communication apparatus may be the first IAB node in the first aspect, or an electronic device (for example, a chip system) configured in the first IAB node. The communication apparatus includes a corresponding means (means) or module configured to perform the first aspect or any possible implementation. For example, the communication apparatus includes a receiving module (also referred to as a receiving unit sometimes) and a sending module (also referred to as a sending unit sometimes). Optionally, the receiving module and the sending module may be coupled. For example, the receiving module is configured to receive first information, where the first information includes a first random access resource; and the sending module is configured to send, by an MT of the apparatus, a first random access request to a second IAB node on the first random access resource, where the first random access request is used by the MT of the apparatus to request to access a distributed unit DU of the second IAB node, and the second IAB node is a child node of the apparatus.

In a possible implementation, the communication apparatus further includes a processing module (also referred to as a processing unit sometimes). For example, the processing module is configured to: determine that quality of communication between the first IAB node and the second IAB node meets a first condition; and/or determine that quality of communication between the first IAB node and a third IAB node meets a second condition, where the third IAB node is a parent node of the first IAB node. In a possible implementation, the communication apparatus includes a storage module (also referred to as a storage unit sometimes), and the storage module may be configured to store a program or instructions.

According to a fifth aspect, an embodiment of this application provides a communication apparatus. The communication apparatus may be the second IAB node in the second aspect, or an electronic device (for example, a chip system) configured in the second IAB node. The communication apparatus includes a corresponding means (means) or module configured to perform the second aspect or any possible implementation. For example, the communication apparatus includes a receiving module (also referred to as a receiving unit sometimes). Optionally, the communication apparatus further includes a sending module (also referred to as a sending unit sometimes) and a processing module (also referred to as a processing unit sometimes). Optionally, the receiving module and the sending module may be coupled. For example, the receiving module is configured to receive a first random access request from a first IAB node on a first random access resource, where the first random access request is used by an MT of the first IAB node to request to access a DU of the apparatus.

Optionally, the sending module is configured to send first information to the first IAB node, where the first information includes the first random access resource, and the apparatus is a child node of the first IAB node. Optionally, the processing module is, for example, configured to: determine that quality of communication between the first IAB node and the second IAB node meets a first condition; and/or determine that quality of communication between the first IAB node and a third IAB node meets a second condition, where the third IAB node is a parent node of the first IAB node. In a possible implementation, the communication apparatus includes a storage module (also referred to as a storage unit sometimes), and the storage module may be configured to store a program or instructions.

According to a sixth aspect, an embodiment of this application provides a communication apparatus. The communication apparatus may be the network device in the third aspect, or may be a chip system configured with a function of the network device. The communication apparatus includes a corresponding means (means) or module configured to perform the third aspect or any possible implementation. For example, the communication apparatus includes a sending module (also referred to as a sending unit sometimes). Optionally, the communication apparatus further includes a receiving module (also referred to as a receiving unit sometimes) and a processing module (also referred to as a processing unit sometimes). Optionally, the receiving module and the sending module may be coupled. For example, the sending module is configured to send first information to a first IAB node, where the first information includes a first random access resource, the first random access resource is used by an MT of the first IAB node to initiate random access to a DU of a second IAB node, and the second IAB node is a child node of the first IAB node; or the sending module is configured to send second information to a second IAB node, where the second information includes a first random access resource, the first random access resource is used by a DU of the second IAB node to receive a first random access request from an MT of a first IAB node, and the second IAB node is a child node of the first IAB node.

Optionally, the processing module is, for example, configured to: determine that quality of communication between the first IAB node and the second IAB node meets a first condition; and/or determine that quality of communication between the first IAB node and a third IAB node meets a second condition, where the third IAB node is a parent node of the first IAB node. In a possible implementation, the communication apparatus includes a storage module (also referred to as a storage unit sometimes), and the storage module may be configured to store a program or instructions.

According to a seventh aspect, an embodiment of this application provides a communication system. The communication system includes the communication apparatus in the fourth aspect or any possible implementation and the communication apparatus in the fifth aspect or any possible implementation.

According to an eighth aspect, an embodiment of this application provides a communication system. The communication system includes the communication apparatus in the fourth aspect or any possible implementation, the communication apparatus in the fifth aspect or any possible implementation, and the communication apparatus in the sixth aspect or any possible implementation.

According to a ninth aspect, an embodiment of this application provides a communication apparatus. The communication apparatus includes a processor and a memory. The memory is configured to store one or more computer programs, and the one or more computer programs include computer-executable instructions; and when the communication apparatus runs, the processor executes the one or more computer programs stored in the memory, so that the communication apparatus performs the method in any one of the first aspect to the third aspect. Optionally, the communication apparatus further includes other components, for example, an antenna, an input/output module, and an interface. Such components may be hardware, software, or a combination of software and hardware.

According to a tenth aspect, an embodiment of this application provides a chip system. The chip system includes a processor and an interface. The processor is configured to invoke instructions from the interface and run the instructions; and when the processor executes the instructions, the method in any one of the first aspect to the third aspect is implemented.

According to an eleventh aspect, an embodiment of this application provides a computer-readable storage medium. The computer-readable storage medium is configured to store a computer program or instructions; and when the computer program or the instructions are run, the method in any one of the first aspect to the third aspect is implemented.

According to a twelfth aspect, an embodiment of this application provides a computer program product including instructions; and when the instructions are run by a communication apparatus, the communication apparatus is enabled to perform the method in any one of the first aspect to the third aspect.

According to a thirteenth aspect, an embodiment of this application provides a computer program product including instructions; and when the computer program product is run on a computer, the method in any one of the first aspect to the third aspect is implemented.

For beneficial effect of the second aspect to the thirteenth aspect, refer to the beneficial effect described in the first aspect. Details are not described herein again.

### BRIEF DESCRIPTION OF DRAWINGS

FIG. 1 is a diagram of a scenario to which an embodiment of this application is applicable;
FIG. 2 is a diagram of a structure of an IAB system to which an embodiment of this application is applicable;
FIG. 3 is a diagram of several protocol stack architectures of an IAB node in an IAB system to which an embodiment of this application is applicable;
FIG. 4 is a diagram of a user plane protocol stack architecture of each part in an IAB system to which an embodiment of this application is applicable;
FIG. 5 is a diagram of a control plane protocol stack architecture of each part in an IAB system to which an embodiment of this application is applicable;
FIG. 6 is a diagram of another scenario to which an embodiment of this application is applicable;
FIG. 7 is a schematic flowchart of a communication method according to an embodiment of this application;
FIG. 8 is a diagram of a structure of another IAB system according to an embodiment of this application;
FIG. 9 to FIG. 12 are schematic flowcharts of four communication methods according to embodiments of this application; and
FIG. 13 and FIG. 14 are diagrams of architectures of two communication apparatuses according to embodiments of this application.

### DESCRIPTION OF EMBODIMENTS

To make objectives, technical solutions, and advantages of embodiments of this application clearer, the following further describes embodiments of this application in detail with reference to the accompanying drawings.

The following describes some terms in embodiments of this application, to facilitate understanding of a person skilled in the art.
1. A terminal device is a device having a wireless transceiver function, and may be a fixed device, a mobile device, a handheld device, a wearable device, a vehicle-mounted device, or a wireless apparatus (for example, a communication module or a chip system) disposed in the foregoing device. The terminal device is configured to connect to a person, an object, a machine, and the like, and may be widely used in various scenarios. For example, the terminal device includes but is not limited to a terminal device in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), telemedicine (remote medical), a smart grid (smart grid), smart furniture, smart office, a smart wearable, smart transportation, a smart city (smart city), an uncrewed aerial vehicle, a robot, and the like. The terminal device may be sometimes referred to as user equipment (user equipment, UE), a terminal, an access station, a UE station, a remote station, a wireless communication device, a user apparatus, or the like. However, if the various terminals described above are located in a vehicle (for example, placed in the vehicle or installed in the vehicle), the terminals may be considered as vehicle-mounted terminal devices. For example, the vehicle-mounted terminal device is also referred to as an on-board unit (on-board unit, OBU).
2. A network device includes, for example, an access network device (or referred to as an access network element) and/or a core network device (or referred to as a core network element).

The access network device is a device having a wireless transceiver function, and is configured to communicate with the terminal device. The access network element includes but is not limited to a base station (a BTS, a NodeB, an eNodeB/eNB, or a gNodeB/gNB) in the foregoing communication system, a transmission reception point (t(R)ANsmission reception point, TRP), a subsequent evolved base station in 3GPP, an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks of a same access technology mentioned above, or may support networks of different access technologies mentioned above. The base station may include one or more co-site or non-co-site transmission reception points. Alternatively, the network device may be a radio controller, a central unit (central unit, CU) that may also be referred to as an aggregation unit, and/or a distributed unit (distributed unit, DU) in a cloud radio access network (cloud radio access network, C(R)AN) scenario. Alternatively, the network device may be a server, a wearable device, a vehicle-mounted device, or the like. For example, a network device in the vehicle-to-everything (vehicle-to-everything, V2X) technology may be a road side unit (road side unit, RSU). The following uses an example in which the access network device is a base station for description. A plurality of network devices in the communication system may be base stations of a same type, or may be base stations of different types. The base station may communicate with the terminal device, or may communicate with the terminal device through a relay station. The terminal device may communicate with a plurality of base stations in different access technologies.

The core network device is configured to implement at least one of functions such as mobility management, data processing, session management, and policy and charging. Names of devices that implement core network functions in systems of different access technologies may be different. This is not limited in embodiments this application. A 5^{th} generation mobile communication technology (5^{th} generation, 5G) system is used as an example. The core network device includes an access and mobility management function (access and mobility management function, AMF), a session management function (session management function, SMF), a PCF, a user plane function (user plane function, UPF), or the like.

3. An IAB node is a wireless access point that provides a wireless access service for the terminal device. The IAB node includes a distributed unit (distributed unit, DU) and a mobile terminal (mobile terminal, MT). The MT may also be understood as a component that is similar to the terminal device and that is present in the IAB node. The DU is relative to a function of a central unit (central unit, CU) of the network device. That the IAB node includes the MT and the DU may also be described as follows: The IAB node includes an MT function and a DU function, or the IAB node has an MT role and a DU role. The MT of the IAB node may be used by the IAB node to communicate with a parent node of the IAB node, and the DU of the IAB node may be used by the IAB node to communicate with a child node of the IAB node. Both the MT and the DU of the IAB node may have complete transceiver modules. Both the MT and the DU may be logic modules. The MT and the DU of the IAB node may share a hardware module of the IAB node, for example, may share a transceiver antenna and a baseband processing module of the IAB node. The IAB node may be specifically implemented through a small cell, customer premises equipment (customer premises equipment, CPE), a residential gateway (residential gateway, RG), or the like.

4. A donor node (donor node) provides a core network interface for the terminal device and a wireless access point that provides a wireless backhaul function for the IAB node. The donor node is a node that accesses a core network, and is a network device in a radio access network. For example, the donor node is a base station, a donor base station (donor base station), or an anchor base station in an IAB system. The donor node may be configured to be responsible for processing data at a packet data convergence protocol (packet data convergence protocol, PDCP) layer, and be responsible for receiving data from the core network and forwarding the data to the IAB node, receiving data from the IAB node and forwarding the data to the core network, and so on. The donor node may be, for example, a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), or a baseband unit (baseband unit, BBU), or may include a next generation NodeB (next generation NodeB, gNB) in a new radio (new radio, NR) system. The donor node may include a central unit (central unit, CU) and a distributed unit (distributed unit, DU). Alternatively, the donor node may exist in a form in which a user plane (user plane, UP) (which may be a CU-UP for short) and a control plane (control plane, CP) (which may be a CU-CP for short) are split. In other words, the donor node includes the CU-CP and the CU-UP. One donor node may include one CU-CP and at least one CU-UP. For example, the donor node is implemented through a gNB. Correspondingly, one gNB may include one gNB-CU-CP and at least one gNB-CU-UP. Alternatively, the donor node is implemented through a donor-CU in the IAB system. Correspondingly, one donor-CU may include one donor-CU-CP and at least one donor-CU-UP. Optionally, the donor node may be considered as a special IAB node, and the donor node may also be considered as a network device.

5. A link is a path between two adjacent nodes on a transmission path, and the node is, for example, an IAB node. The transmission path may be a path for short below.

6. A previous-hop node of a node is a last node that is on a path including the node and that receives data before the node.

7. A next-hop node of a node is a first node that is on a path including the node and that receives data after the node.

8. An ingress link of a node is a link between the node and a previous-hop node of the node, and may also be referred to as a previous-hop link of the node.

9. An egress link of a node is a link between the node and a next-hop node of the node, and may also be referred to as a next-hop link of the node.

10. Access IAB node: The access IAB node is the IAB node accessed by the terminal device.

11. An intermediate IAB node is an IAB node that provides a wireless backhaul service for another IAB node (for example, an access IAB node or another intermediate IAB node).

The access IAB node and the intermediate IAB node are relative to a specific terminal device. For example, an IAB node 1 may be an access IAB node relative to a terminal device 1, but the IAB node 1 may be an intermediate node relative to a terminal device 2. In other words, whether an IAB node accesses an IAB node or an intermediate IAB node needs to be determined based on an application scenario.

12. A half duplex constraint (half duplex constraint, HDC) means that when an MT of an IAB node performs sending, a DU of the IAB node cannot perform receiving. Similarly, when the DU of the IAB node performs sending, the MT of the IAB node cannot perform receiving.

13. A physical random access channel (physical random access channel, PRACH) is used to transmit a random access channel (random access channel, RACH) There may be a mapping relationship between the PRACH and the RACH. The PRACH includes an uplink random access channel. After receiving a fast physical access channel (fast physical access channel, FPACH) response message, the IAB node or the terminal device may send a radio resource control connection request (radio resource control connection request, RRC Connection Request) message on the PRACH channel according to an indication of the donor node, to establish an RRC connection. If there are a plurality of PRACH channels, the IAB node or the terminal device may select one PRACH channel.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one item (piece) of a, b, or c indicates a, b, c, a and b, a and c, b and c, or a, b, and c, where a, b, and c may be singular or plural.

To improve spectrum utilization, base stations will be deployed more densely in the future. However, the base stations are usually connected to the core network through optical fibers. If a large quantity of base stations are deployed, a large quantity of optical fibers need to be deployed, and consequently deployment costs of optical fibers are very high. Therefore, an IAB solution can be used to reduce deployment costs of a part of optical fibers. In the IAB solution, the IAB node may provide a wireless access service for the terminal device through a wireless access link (access link, AL), and the IAB node may be connected to the donor node through a wireless backhaul link (backhaul link, BL), to transmit data from the terminal device. The wireless access link is an access link for short below, and the wireless backhaul link is also a backhaul link for short below.

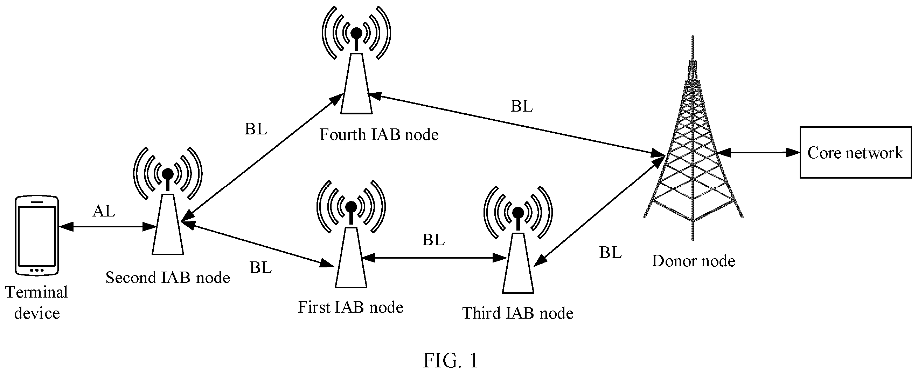

FIG. 1 is a diagram of a scenario to which an embodiment of this application is applicable. Alternatively, FIG. 1 may be understood as a diagram of an architecture of an IAB system. As shown in FIG. 1, the scenario includes a terminal device, one or more IAB nodes, a donor node, and a core network. In FIG. 1, an example in which the one or more IAB nodes include a first IAB node, a second IAB node, a third IAB node, and a fourth IAB node is used.

The one or more IAB nodes may provide a wireless access service for the terminal device, and may be connected to the donor node through a backhaul link. The donor node may provide a wireless backhaul function for the one or more IAB nodes, so that the terminal device served by the one or more IAB nodes communicates with the core network. For example, in a standalone (standalone, SA) 5G communication system, any one of the one or more IAB nodes may, through the donor node, be connected to a core network (5G core, SGC) of the 5G communication system through a wired link. In a non-standalone (non-standalone, NSA) 5G communication system, any one of the one or more IAB nodes may be connected to an evolved packet core network (evolved packet core, EPC) through an eNB on a control plane, and connected to the EPC through the donor node and the eNB on a user plane.

To ensure reliability of service transmission, the IAB system supports multi-hop IAB networking. Correspondingly, there may be a plurality of paths between the terminal device and the donor node. On a path, there is a clear hierarchical relationship between a plurality of IAB nodes and the donor node that serves the plurality of IAB nodes.

One IAB node may consider a node that provides a backhaul service for the IAB node as a parent node. Alternatively, it may be understood as that an adjacent upstream (or upper-level) node closer to a donor node of one IAB node is referred to as a parent node of the IAB node. Alternatively, it may be understood as that an IAB node connected to an MT of one IAB node is a parent node of the IAB node. Correspondingly, one IAB node may be considered as a child node of a parent node of the IAB node. Alternatively, it may be understood as that an adjacent downstream (lower-level) node far away from a donor node of one IAB node is referred to as a child node of the IAB node. Alternatively, it may be understood as that an IAB node connected to a DU of one IAB node is a child node of the IAB node.

For example, as shown in FIG. 1, parent nodes of the second IAB node include the first IAB node and the fourth IAB node. In other words, both a child node of the first IAB node and a child node of the fourth IAB node include the second IAB node. A parent node of the first IAB node includes the third IAB node. In other words, a child node of the third IAB node includes the first IAB node. Both a parent node of the fourth IAB node and a parent node of the third IAB node include the donor node. In other words, child nodes of the donor node include the fourth IAB node and the third IAB node.

As described above, in the IAB system, one path between the terminal device and the donor node may include one or more IAB nodes. Each of the one or more IAB nodes needs to maintain a backhaul link (a parent link) oriented to a parent node, and further needs to maintain a radio link (a child link) oriented to a child node. If one IAB node is a node accessed by the terminal device, an access link is between the IAB node and a child node (namely, the terminal device). If one IAB node is a node that provides a backhaul service for another IAB node, a backhaul link is between the IAB node and a child node (namely, the another IAB node). As shown in FIG. 1, the terminal device accesses the second IAB node through an access link, the second IAB node accesses the fourth IAB node through a backhaul link, and the fourth IAB node accesses the donor node through a backhaul link. In addition, the second IAB node may access the first IAB node through a backhaul link, the first IAB node accesses the third IAB node through a backhaul link, and the third IAB node accesses the donor node through a backhaul link. In FIG. 1, "AL" indicates an access link, and "BL" indicates a backhaul link.

Uplink data may be transmitted to the donor node through the one or more IAB nodes, and then transmitted by the donor node to a device (specifically, a mobile gateway device) in the core network. The mobile gateway device is, for example, a UPF network element. As shown in FIG. 1, there are two paths for transmitting the uplink data from the core network to the core network. The two paths are specifically: the terminal device→the second IAB node→the fourth IAB node→ the donor node→the core network, and the terminal device→the second IAB node→the first IAB node→the third IAB node→the donor node→the core network.

Downlink data may be transmitted from the core network to the donor node, and then transmitted to the terminal device through the one or more IAB nodes. As shown in FIG. 1, there are two paths for transmitting the downlink data to the terminal device. The two paths are specifically: the core network→the donor node→the fourth IAB node→the second IAB node→the terminal device, and the core network→the donor node→the third IAB node→the first IAB node→the second IAB node→the terminal device.

The second IAB node in FIG. 1 may be considered as an access IAB node, and the first IAB node, the third IAB node, and the fourth IAB node may all be considered as intermediate access IAB nodes. In addition, in FIG. 1, an example in which a quantity of terminal devices is 1, a quantity of IAB nodes is 4, and a quantity of donor nodes is 1 is used. Actually, the quantities of terminal devices, IAB nodes, and donor nodes are not limited. In a possible implementation, the terminal device may further directly communicate with the donor node. This is not illustrated in FIG. 1.

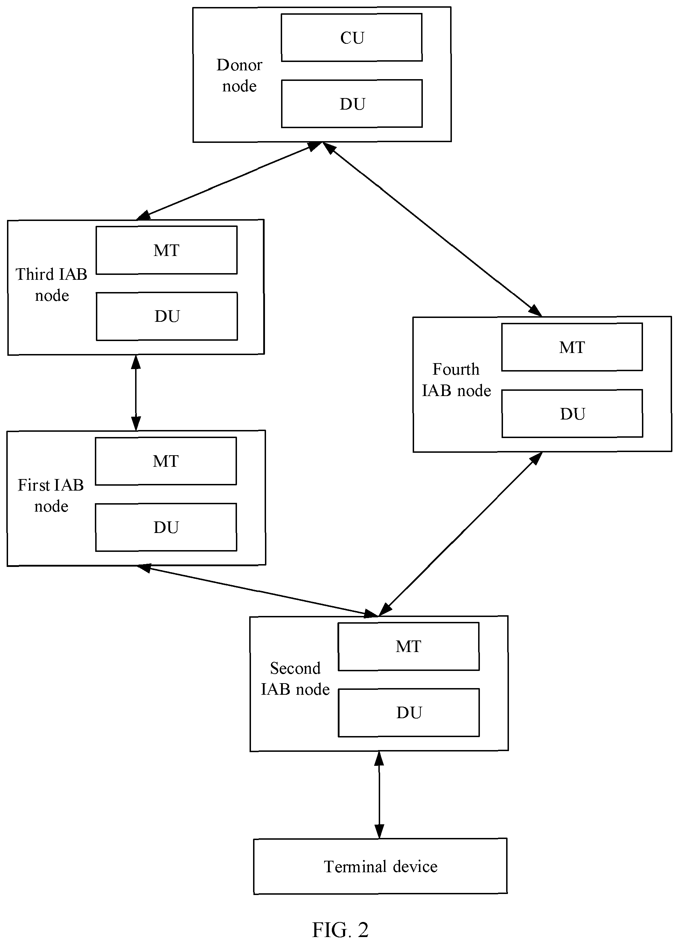

Structures of any two IAB nodes in FIG. 1 may be the same. The following provides descriptions with reference to a diagram of a structure of an IAB system shown in FIG. 2. In FIG. 2, a terminal device, a first IAB node, a second IAB node, a third IAB node, a fourth IAB node, and a donor node are included. The first IAB node in FIG. 2 is, for example, the first IAB node in FIG. 1, the second IAB node is, for example, the second IAB node in FIG. 1, the third IAB node is, for example, the third IAB node in FIG. 1, the fourth IAB node is, for example, the fourth IAB node in FIG. 1, and the donor node is, for example, the donor node in FIG. 1.

As shown in FIG. 2, any IAB node may include a DU and an MT, and the donor node may include a DU and a CU. With reference to the diagram of the structure of the IAB system shown in FIG. 2, the following separately describes paths for transmitting uplink data and downlink data.

There are two paths for transmitting the uplink data. The two paths are specifically: the terminal device→a DU of the second IAB node→an MT of the second IAB node→a DU of the fourth IAB node→an MT of the fourth IAB node→the donor node, and the terminal device→the DU of the second IAB node→the MT of the second IAB node →a DU of the first IAB node→an MT of the first IAB node→a DU of the third IAB node→an MT of the third IAB node→the donor node. There are two paths for transmitting the downlink data. The two paths are specifically: the donor node→the MT of the fourth IAB node→the DU of the fourth IAB node→the MT of the second IAB node→the DU of the second IAB node→the terminal device, and the donor node→the MT of the third IAB node→the DU of the third IAB node→the MT of the first IAB node→the DU of the first IAB node→the MT of the second IAB node→the DU of the second IAB node→the terminal device.

The CU and the DU of the donor node may be connected through an F1 interface. The F1 interface may also be referred to as an F1* interface. The CU is connected to the core network through a next generation (next generation, NG) interface. Optionally, the F1 interface may include a control plane interface (F1-C) and a user plane interface (F1-U).

In future communication, the IAB node is still referred to as an IAB node, or may have another name. A DU of the IAB node is still referred to as a DU of the IAB node, or may have another name. An MT of the IAB node is still referred to as an MT of the IAB node, or may have another name. The donor node is still referred to as a donor node, or may have another name. This is not limited in this embodiment of this application.

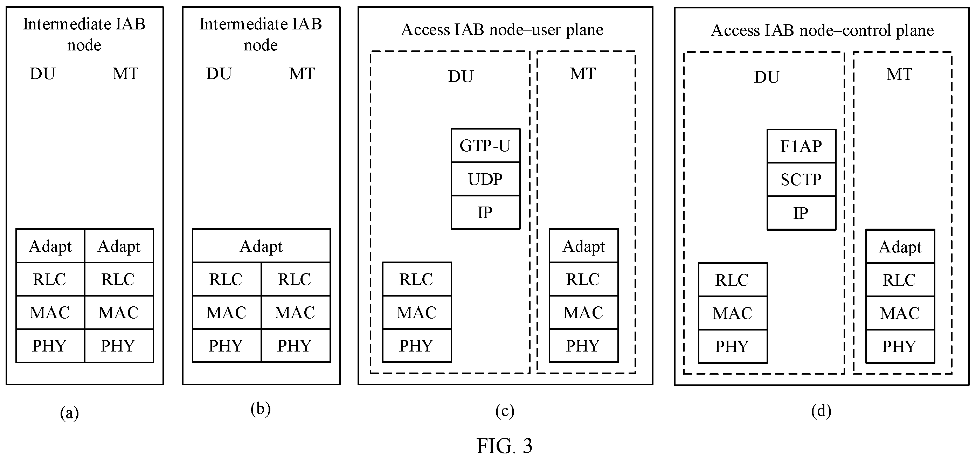

With reference to diagrams of several protocol stack architectures of an IAB node in an IAB system shown in FIG. 3, the following uses an example to describe a protocol stack architecture of the IAB node. FIG. 3 relates to an intermediate IAB node and an access IAB node. The intermediate IAB node may be, for example, the first IAB node, the third IAB node, or the fourth IAB node in FIG. 1 or FIG. 2. The access IAB node may be, for example, the second IAB node in FIG. 1 or FIG. 2.

(a) in FIG. 3 is a diagram of a protocol stack architecture of the intermediate IAB node. As shown in (a) in FIG. 3, protocol stack architectures of a DU and an MT of the intermediate IAB node may be the same. As shown in (a) in FIG. 3, protocol stacks of the DU and the MT of the intermediate IAB node each include an adaptation (adapt) layer (layer), a radio link control (radio link control, RLC) layer, a media access control (media access control, MAC) layer, and a physical (physical, PHY) layer.

(b) in FIG. 3 is a diagram of another protocol stack architecture of the intermediate IAB node. As shown in (b) in FIG. 3, protocol stack architectures of the DU and the MT of the intermediate IAB node are also the same. A difference from (a) in FIG. 3 is that the DU and the MT of the intermediate node IAB in (b) in FIG. 3 share an adaptation layer.

(c) in FIG. 3 is a diagram of a user plane protocol stack architecture of the access IAB node. As shown in (c) in FIG. 3, user plane protocol stack architectures of the MT and the DU of the access IAB node are different. The DU of the access IAB node may communicate with the terminal device. Therefore, a protocol stack of the DU of the access IAB node adapts to a protocol stack of the terminal device. For example, a user plane protocol stack of the DU of the access IAB node includes a general packet radio service tunneling protocol (general packet radio service tunneling protocol-U, GTP-U) layer, a user datagram protocol (user datagram protocol, UDP) layer, an internet protocol (internet protocol, IP) layer, an RLC layer, a MAC layer, and a PHY layer. The MT of the access IAB node may communicate with another IAB node. Therefore, a protocol stack of the MT of the access IAB node may adapt to a protocol stack of the intermediate IAB node. For example, a user plane protocol stack of the MT of the access IAB node includes an adaptation layer, an RLC layer, a MAC layer, and a PHY layer.

(d) in FIG. 3 is a diagram of a control plane protocol stack architecture of the access IAB node. As shown in (d) in FIG. 3, a control plane protocol stack of a DU of the access IAB node includes an F1 application protocol (F1 application protocol, F1AP) layer, a stream control transmission protocol (stream control transmission protocol, SCTP) layer, an IP layer, an RLC layer, a MAC layer, and a PHY layer. A control plane protocol stack of an MT of the access IAB node includes an adaptation layer, an RLC layer, a MAC layer, a PHY layer, and the like.

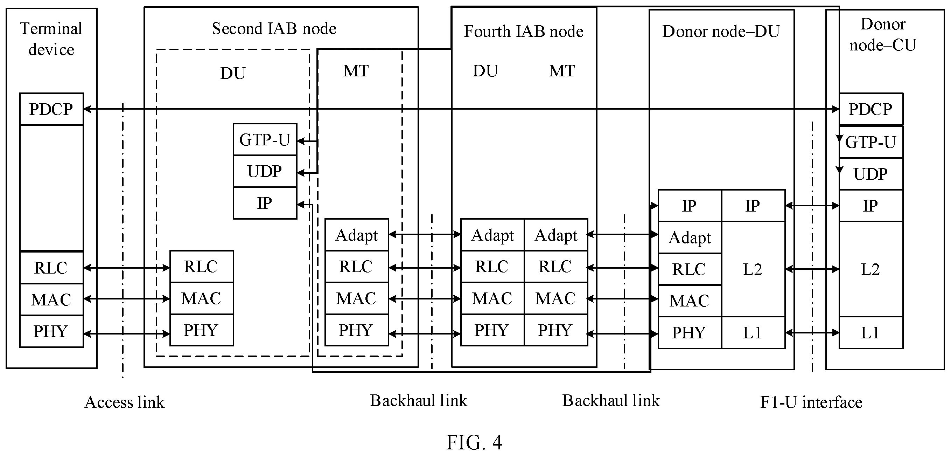

FIG. 4 is a diagram of a user plane protocol stack architecture of each part in an IAB system. In FIG. 4, a terminal device, a second IAB node, a fourth IAB node, and a donor node are included. The terminal device in FIG. 4 is, for example, the terminal device shown in FIG. 1 or FIG. 2, the second IAB node is, for example, the second IAB node in FIG. 1 or FIG. 2, the fourth IAB node is, for example, the fourth IAB node in FIG. 1 or FIG. 2, and the donor node is, for example, the donor node in FIG. 1 or FIG. 2. In FIG. 4, an example in which the fourth IAB node is an intermediate IAB node and the second IAB node is an access IAB node is used.

As shown in FIG. 4, a user plane protocol stack of the terminal device includes a packet data convergence protocol (packet data convergence protocol, PDCP) layer, an RLC layer, a MAC layer, and a PHY layer. A user plane protocol stack of a DU of the second IAB node includes a GTP-U layer, a UDP layer, an IP layer, an RLC layer, a MAC layer, and a PHY layer. An MT of the second IAB node includes an adaptation layer, an RLC layer, a MAC layer, and a PHY layer. User plane protocol stacks of a DU and an MT of the fourth IAB node each include an adaptation layer, an RLC layer, a MAC layer, and a PHY layer. A user plane protocol stack of a DU of the donor node includes an IP layer, an L2 layer, and an L1 layer. The L2 layer is a link layer. For example, the L2 layer may be a data link layer in an open system interconnection (open system interconnection, OSI) reference model, and may specifically include an adaptation layer, an RLC layer, and a MAC layer. The L1 layer may be a PHY layer in the OSI reference model. Auser plane protocol stack of a CU of the donor node includes a PDCP layer, a GTP-U layer, a UDP layer, an IP layer, an L2 layer, and an L1 layer.

A user plane of the DU and a user plane of the CU of the donor node may be connected through an F1-U interface. A protocol layer of the F1-U interface includes one or more of an IP layer, a UDP layer, and a GTP-U layer. A protocol layer of an F1 interface may be understood as a communication protocol layer on the F1 interface. Optionally, the protocol layer of the F1-U interface further includes a PDCP layer and/or an IP security (IP Security, IPsec) layer.

For example, as shown in FIG. 4, user plane protocol stacks of any two devices that communicate with each other may adapt to each other. For example, the user plane protocol stack of the terminal device may adapt to the user plane protocol stack of the DU of the second IAB node, the user plane protocol stack of the MT of the second IAB node adapts to the user plane protocol stack of the DU of the fourth IAB node, the user plane protocol stack of the MT of the second IAB node adapts to the user plane protocol stack of the DU of the donor node, and the user plane protocol stack of the DU of the donor node adapts to the user plane protocol stack of the CU of the donor node.

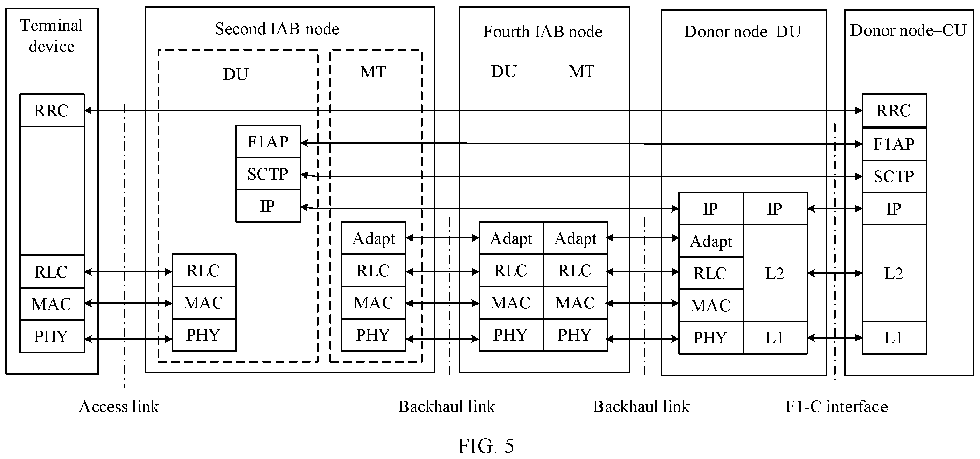

FIG. 5 is a diagram of a control plane protocol stack architecture of each part in an IAB system. In FIG. 5, a terminal device, a second IAB node, a fourth IAB node, and a donor node are included. The terminal device in FIG. 5 is, for example, the terminal device shown in FIG. 1 or FIG. 2, the second IAB node is, for example, the second IAB node in FIG. 1 or FIG. 2, the fourth IAB node is, for example, the fourth IAB node in FIG. 1 or FIG. 2, and the donor node is, for example, the donor node in FIG. 1 or FIG. 2. In FIG. 5, an example in which the fourth IAB node is an intermediate IAB node and the second IAB node is an access IAB node is used.

As shown in FIG. 5, a control plane protocol stack of the terminal device includes a radio resource control (radio resource control, RRC) layer, an RLC layer, a MAC layer, and a PHY layer. A control plane protocol stack of a DU of the second IAB node includes an F1AP layer, an SCTP layer, an IP layer, an RLC layer, a MAC layer, and a PHY layer. A control plane protocol stack of an MT of the second IAB node includes an adaptation layer, an RLC layer, a MAC layer, and a PHY layer. Control plane protocol stacks of a DU and an MT of the fourth IAB node each include an adaptation layer, an RLC layer, a MAC layer, and a PHY layer. A control plane protocol stack of a DU of the donor node includes an IP layer, an L2 layer (which may specifically include an adaptation layer, an RLC layer, and a MAC layer), and an L1 layer (which may specifically include a PHY layer). A control plane protocol stack of a CU of the donor node includes an RRC layer, an F1AP layer, an SCTP layer, an IP layer, an L2 layer, and an L1 layer. A control plane of the DU and a control plane of the CU of the donor node may be connected through an F1-C interface. A protocol layer of the F1-C interface includes one or more of an IP layer, an F1AP layer, and an SCTP layer. Optionally, a control plane protocol layer of an F1 interface further includes one or more of a PDCP layer, an IPsec layer, and a datagram transport layer security (datagram transport layer security, DTLS) layer.

For example, as shown in FIG. 5, control plane protocol stacks of any two devices that communicate with each other may adapt to each other. For example, the control plane protocol stack of the terminal device may adapt to the control plane protocol stack of the DU of the second IAB node, the control plane protocol stack of the MT of the second IAB node adapts to the control plane protocol stack of the DU of the fourth IAB node, the control plane protocol stack of the MT of the second IAB node adapts to the control plane protocol stack of the DU of the donor node, and the control plane protocol stack of the DU of the donor node adapts to the control plane protocol stack of the CU of the donor node.

A non-backhaul link is easily blocked. For example, node congestion, backhaul link congestion, or the like may be caused due to problems such as movement of the terminal device, a seasonal change (leaves), a bad weather condition (for example, rain, snow, or hail), an infrastructure change (for example, a new building), and uneven distribution of load such as transmission of uplink data and downlink data. Consequently, transmission of uplink data or downlink data may fail. As a result, it can be learned that communication reliability of the IAB system needs to be improved.

Transmission of uplink data is used as an example. A destination address of the uplink data is the donor node, and FIG. 2 is still used as an example. A communication link fault between the third IAB node and the donor node is caused due to movement or the like of the third IAB node, and the DU of the third IAB node receives the uplink data from the terminal device. The destination address of the uplink data is the donor node, and it is protocol-defined that when the IAB node forwards data, data received by the MT of the IAB node needs to be forwarded to the DU of the IAB node for forwarding, or data received by the DU of the IAB node needs to be forwarded to the MT of the IAB node for forwarding. Therefore, the DU of the third IAB node needs to forward the uplink data to the MT of the third IAB node for forwarding, and the communication link fault between the third IAB node and the donor node may cause a service between the terminal device and the donor node to be interrupted or the uplink data to be lost.

In view of this, embodiments of this application provide a communication method. In the method, an MT of a parent node (for example, a first IAB node) of one IAB node (for example, a second IAB node) may initiate random access to a DU of the second IAB node, so that a connection may be established between the MT of the first IAB node and the DU of the second IAB node. In other words, the DU of the second IAB node may provide an access service for the MT of the first IAB node, so that an IAB system can establish more backhaul links; and when a specific backhaul link in an IAB network is faulty, data can be transmitted through another backhaul link, to improve communication reliability of the IAB system. In addition, because the IAB system in embodiments of this application includes more backhaul links, the IAB system can carry more data transmission. This helps improve a capacity of the IAB system.

The communication method provided in embodiments of this application may be applied to any IAB system, for example, the IAB system shown in FIG. 1 or FIG. 2. For a protocol stack architecture of the IAB node, refer to any protocol stack architecture in FIG. 3 to FIG. 5.

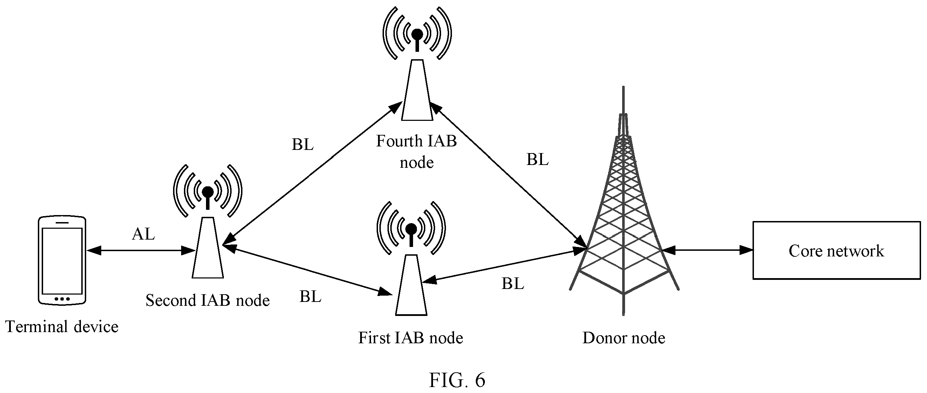

FIG. 6 is a diagram of another scenario to which an embodiment of this application is applicable. Alternatively, FIG. 6 may be understood as a diagram of an architecture of another IAB system. As shown in FIG. 6, the scenario includes a terminal device, one or more IAB nodes, a donor node, and a core network. A difference from FIG. 1 is that the one or more IAB nodes in FIG. 6 are described by using an example in which a first IAB node, a second IAB node, and a fourth IAB node are used (that is, a parent node of the first IAB node is the donor node). For implementations and functions of the IAB node, the terminal device, the donor node, and the core network, refer to the foregoing descriptions.

As shown in FIG. 6, there are two paths for transmitting uplink data. The two paths are specifically: the terminal device→the second IAB node→the fourth IAB node→the donor node→the core network, and the terminal device→the second IAB node→the first IAB node→the donor node→the core network. There may be two paths for transmitting downlink data. The two paths are specifically: the core network→the donor node→the fourth IAB node→the second IAB node→the terminal device, and the core network→the donor node→the first IAB node→the second IAB node→the terminal device.

The following describes the communication method in embodiments of this application with reference to the accompanying drawings. In the accompanying drawings corresponding to embodiments of this application, all steps represented by using dashed lines are optional steps. Embodiments of this application are applicable to any IAB system in FIG. 1, FIG. 2, or FIG. 6. The first IAB node in embodiments of this application may be, for example, the first IAB node in FIG. 1, FIG. 2, or FIG. 6, the second IAB node may be, for example, the second IAB node in FIG. 1, FIG. 2, FIG. 4, FIG. 5, or FIG. 6, the third IAB node may be, for example, the second IAB node in FIG. 1 or FIG. 2 or may be the donor node in FIG. 6, the fourth IAB node may be, for example, the fourth IAB node in FIG. 1, FIG. 2, FIG. 4, FIG. 5, or FIG. 6, and the donor node is, for example, the donor node in FIG. 1, FIG. 2, FIG. 4, FIG. 5, or FIG. 6. In addition, unless otherwise specified, a network device in embodiments of this application may be, for example, the donor node, for example, the donor node in FIG. 1, FIG. 2, FIG. 4, FIG. 5, or FIG. 6, or may be a device in the core network, for example, a mobile gateway device, which is specifically, for example, a UPF network element.

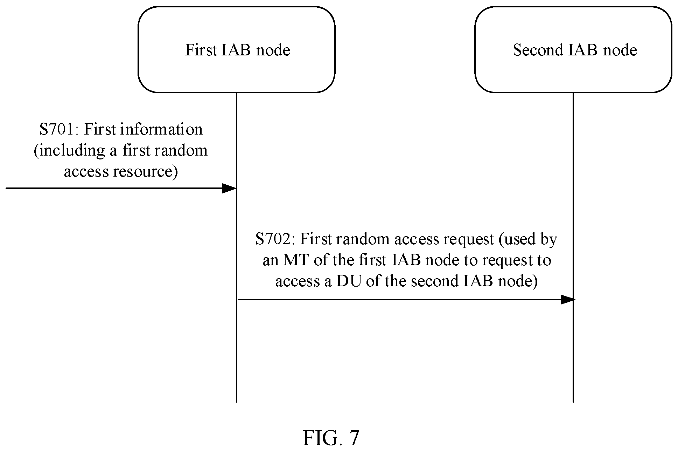

FIG. 7 is a schematic flowchart of a communication method according to an embodiment of this application. The schematic flowchart shown in FIG. 7 includes the following steps.

S701: A first IAB node receives first information. Optionally, S701 may alternatively be described as follows: An MT of the first IAB node receives the first information.

For example, the first information may include a first random access (random access) resource. The first random access resource is used by the MT of the first IAB node to initiate random access to a DU of a second IAB node. Optionally, the first random resource may include a preamble sequence, a time domain resource, and/or the like. The preamble sequence may also be referred to as a preamble, or may be referred to as a preamble sequence. For example, the first information may include one or more of a Zadoff-Chu (Zadoff-Chu, ZC) sequence index, a PRACH configuration index, and information about the time domain resource.

The ZC sequence index indicates (or determines) a ZC sequence. The ZC sequence may be used to determine the preamble (preamble) sequence. For example, the preamble sequence may be obtained by performing a cyclic shift on the ZC sequence. The PRACH configuration index indicates (or determines) a format (format) of the preamble sequence and a time unit in which a PRACH is located. The time unit is, for example, a subframe or a slot. The information about the time domain resource may include one or more of a periodic scale factor, a quantity of random access occasions associated with a synchronization signal, and an offset of the random access occasion, associated with the synchronization signal, relative to the time unit.

The periodic scale factor is used to determine a periodicity of a random access resource. The quantity of random access occasions associated with the synchronization signal is a quantity of RACH occasions. The synchronization signal is, for example, a synchronization signal block (synchronization signal block, SSB). The quantity of random access occasions associated with the synchronization signal may include a quantity of random access occasions associated with each of a plurality of synchronization signals. The offset of the random access occasion, associated with the synchronization signal, relative to the time unit is an offset of a time unit of a RACH occasion. The offset of the random access occasion, associated with the synchronization signal, relative to the time unit may include an offset of the random access occasion, associated with each of the plurality of synchronization signals, relative to the time unit. The first IAB node receives the first information in a plurality of manners, and the following describes the manners by using examples.

In a manner 1, the first IAB node receives the first information from a network device. The network device in the manner 1 is, for example, a donor node or a device in a core network.

For example, if a parent node of the first IAB node includes the donor node, the network device may directly send the first information to the first IAB node. Alternatively, if the parent node of the first IAB node does not include the donor node, the network device may send the first information to the first IAB node through the parent node (for example, a third IAB node) of the first IAB node. Optionally, the first IAB node may send a first request to the network device. Correspondingly, the network device receives the first request from the first IAB node, and sends the first information to the first IAB node. The first request is used to request the first random access resource. Alternatively, the network device may actively send the first information to the first IAB node, and the first IAB node does not need to request the first information.

For example, the first information may be carried in higher layer signaling. The network device sends the higher layer signaling to the first IAB node. Correspondingly, that the first IAB node receives the higher layer signaling from the network device is equivalent to that the first IAB node receives the first information. The higher layer signaling is, for example, RRC signaling. Alternatively, the first information may be carried in configuration information of the MT of the first IAB node. The network device sends the configuration information of the MT of the first IAB node to the first IAB node. Correspondingly, that the first IAB node receives the configuration information of the MT of the first IAB node from the network device is equivalent to that the first IAB node receives the first information. The configuration information of the MT of the first IAB node indicates a transmission configuration of the MT of the first IAB node. In this way, the network device may reuse the higher layer signaling or the configuration information of the MT to carry the first information, and does not need to use dedicated signaling to carry the first information. This helps reduce signaling exchange between the network device and the first IAB node.

Optionally, the configuration information of the MT of the first IAB node may further include data bearer mapping information and/or quality of service (quality of service, QoS) configuration information of the MT of the first IAB node. The data bearer mapping information indicates a path for the MT of the first IAB node to transmit data. The quality of service configuration information indicates quality of service of the MT of the first IAB node.

Alternatively, the first information may be carried in dedicated signaling. The network device sends the dedicated signaling to the first IAB node. Correspondingly, that the first IAB node receives the dedicated signaling from the network device is equivalent to that the first IAB node receives the first information.

In a manner 2, the second IAB node may send the first information to the first IAB node. Correspondingly, the first IAB node receives the first information from the second IAB node. Optionally, an MT of the second IAB node may send the first information to a DU of the first IAB node, and the DU of the first IAB node sends the first information to the MT of the first IAB node.

The first information may be carried in a first message (message 1, Msg1). The first message is a message in a random access process initiated by the MT of the second IAB node to the DU of the first IAB node. The second IAB node sends the first message to the first IAB node. Correspondingly, that the first IAB node receives the first message from the second IAB node is equivalent to that the first IAB receives the first information. Alternatively, the first information may be carried in a third message (message 3, Msg3). The third message is a message in a random access process initiated by the MT of the second IAB node to the DU of the first IAB node. The second IAB node sends the third message to the first IAB node. Correspondingly, that the first IAB node receives the third message from the second IAB node is equivalent to that the first IAB receives the first information. Alternatively, the first information may be carried in a backhaul adaptation protocol control protocol data unit (backhaul adaptation protocol control protocol data unit, BAP control PDU).

The first random access resource may be configured by an IAB system or protocol-configured in the second IAB node, or the first random access resource may be second information that includes the first random access resource and that is received by the second IAB node from a network device or a parent node (for example, a fourth IAB node) of the second IAB node other than the first IAB node. In this way, receiving the second information by the second IAB node is equivalent to obtaining the first random access resource. Optionally, the second IAB node may send a second request to the network device or the fourth IAB node. Correspondingly, after receiving the second request, the network device or the fourth IAB node sends the second information to the second IAB node. Alternatively, the network device or the fourth IAB node may actively send the second information to the second IAB node, and the second IAB node does not need to request the second information.

The second information may be carried in configuration information of the DU of the second IAB node. The network device or the fourth IAB node sends the configuration information of the DU of the second IAB node to the second IAB node. Correspondingly, the second IAB node receives the configuration information of the DU of the second IAB node from the network device or the fourth IAB node. The configuration information of the DU of the second IAB node is used by the second IAB node to communicate with the parent node (for example, including the fourth IAB node or the first IAB node) of the second IAB node.

In a possible implementation, the first IAB node may send third information to the second IAB node. Correspondingly, the second IAB node receives the third information from the first IAB node. The third information includes a second random access resource. The second random access resource is used by the MT of the second IAB node to initiate a random access process to the DU of the first IAB node. The first IAB node may obtain the second random access resource from the network device or a third IAB node. For example, the network device or the third IAB node also includes the second random access resource in the first information. In this way, receiving the first information by the first IAB node is equivalent to obtaining the second random access resource.

Optionally, after receiving the third information, the second IAB node may send a second random access request to the MT of the first IAB node based on the second random access resource. For ease of differentiation, the random access process initiated by the MT of the first IAB node to the DU of the second IAB node based on the first random access resource may be referred to as a first random access process. The random access process initiated by the MT of the second IAB node to the DU of the first IAB node based on the second random access resource may be referred to as a second random access process.

In another possible implementation, the second IAB node may receive third information from the network device or the fourth IAB node. Optionally, the third information may be carried in the configuration information of the DU of the second IAB node.

When the configuration information of the DU of the second IAB node further includes the first random access resource, the network device or the fourth IAB node is equivalent to sending the first random access resource and the second random access resource to the second IAB node by using the configuration information of the DU. This helps reduce a quantity of times of interaction between the second IAB node and the network device or the fourth IAB node.

Because the second IAB node or the first IAB node may perform communication by using an HDC mechanism, the second IAB node or the first IAB node cannot receive a random access request or send a random access request at a same time. Therefore, in a possible implementation, a time domain resource included in the second random access resource is different from a time domain resource included in the first random access resource. Being different includes that the time domain resource included in the second random access resource and the time domain resource included in the first random access resource do not completely overlap, or do not overlap. Because the time domain resource included in the second random access resource is different from the time domain resource included in the first random access resource, when the MT of the first IAB node initiates the random access process to the DU of the second IAB node based on the first random access resource, and the MT of the second IAB node initiates the random access process to the DU of the first IAB node based on the second random access resource, the first IAB node and the second IAB node do not receive the random access request and send the random access request at the same time, so that a conflict between the first random access process and the second random access process is avoided.

Alternatively, if the second IAB node or the first IAB node uses another mechanism for communication (for example, when the DU of the first IAB node receives data, the MT of the first IAB node may send data; or when the MT of the first IAB node sends data, the DU of the first IAB node may receive data; or when the DU of the second IAB node receives data, the MT of the second IAB node may send data; or when the MT of the second IAB node sends data, the DU of the second IAB node may receive data), the time domain resource included in the second random access resource may be the same as the time domain resource included in the first random access resource. Being the same includes that the time domain resource included in the second random access resource completely overlaps the time domain resource included in the first random access resource.

S702: The first IAB node sends a first random access request to the second IAB node on the first random resource. Correspondingly, the second IAB node receives the first random access request from the first IAB node on the first random resource. For example, the first random access request may be used by the MT of the first IAB node to request to access the DU of the second IAB node. Optionally, S702 may alternatively be described as follows: The MT of the first IAB node sends the first random access request to the DU of the second IAB node. Correspondingly, the DU of the second IAB node receives the first random access request from the MT of the first IAB node.

After the second IAB node receives the first random access request, the random access process may be completed between the MT of the first IAB node and the DU of the second IAB node, to establish a connection.

In this embodiment of this application, the MT of the first IAB node may initiate the random access process to the DU of the second IAB node, so that the connection can be established between the MT of the first IAB node and the DU of the second IAB node, and more communication links can be established in the IAB system. For example, when quality of a backhaul link of the first IAB node deteriorates or interruption occurs, the first IAB node may transmit data through the communication link established with the DU of the second IAB node. Therefore, the first IAB node does not need to frequently perform cell reselection or cell handover. This reduces or even avoids service interruption or a data packet loss and handover signaling procedure overheads, improves robustness of service transmission, and helps improve communication reliability of the IAB system.

After receiving the first random access resource, the first IAB node may send the first random access request to the second IAB node. Alternatively, the first IAB node may determine to send the first random access request to the second IAB node when a specific trigger case is met. The trigger case may include any one of the following trigger case 1 to trigger case 4. The following separately describes the trigger case 1 to the trigger case 4.

Trigger case 1: The first IAB node receives first indication information from the second IAB node. The first indication information indicates the MT of the first IAB node to initiate random access to the second IAB node. Optionally, the first indication information may be carried in a backhaul adaptation protocol control protocol data unit. The second IAB node sends the first indication information to the first IAB node through the backhaul adaptation protocol control protocol data unit.

In a first possible implementation, if quality of communication between the first IAB node and the second IAB node meets a first condition, the second IAB node may determine to send the first indication information to the first IAB node. The first condition may include any condition shown in the following B1 to B3.

B1: The first condition includes that a first measurement result is greater than or equal to a first threshold.

The first measurement result indicates communication quality of a communication link from the second IAB node to the first IAB node. The communication link from the second IAB node to the first IAB node may be understood as a link used by the second IAB node to send data to the first IAB node. The first measurement result may be obtained by the first IAB node by measuring a first measurement signal from the second IAB node. In other words, the first measurement result is a measurement result of the first IAB node. For example, the first measurement signal may be sent by the MT of the second IAB node to the DU of the first IAB node. The first measurement signal is, for example, synchronization information, a sounding reference signal (sounding reference signal, SRS), or a channel state information-reference signal (channel state information-reference signal, CSI-RS).

For example, the second IAB node may receive the first measurement result from the first IAB node, and determine that the first measurement result is greater than or equal to the first threshold. For example, the second IAB node may receive the first measurement result from the first IAB node through the network device; or the MT of the second IAB node receives the first measurement result from the DU of the first IAB node, to determine that the first measurement result is greater than or equal to the first threshold. The first threshold may be protocol-configured or configured by the IAB system in the second IAB node, or may be received by the second IAB node from the network device. For example, the first threshold is carried in the second information, and sending the second information by the network device to the second IAB node is equivalent to sending the first threshold to the second IAB node. Alternatively, the first threshold is carried in the configuration information of the DU of the second IAB node, and sending the configuration information of the DU of the second IAB node by the network device to the second IAB node is equivalent to sending the first threshold to the second IAB node.

Alternatively, the second IAB node may receive third indication information from the first IAB node, and the third indication information indicates that the first measurement result is greater than or equal to the first threshold. That the second IAB node receives the third indication information is equivalent to that the second IAB node determines that the first measurement result is greater than or equal to the first threshold. The first threshold may be protocol-configured or configured by the IAB system in the first IAB node, or may be received by the first IAB node from the network device.

For example, the first threshold is carried in the first information, and sending the first information or the configuration information of the MT of the first IAB node by the network device to the first IAB node is equivalent to sending the first threshold to the first IAB node. Alternatively, the first threshold is carried in the configuration information of the MT of the first IAB node, and sending the configuration information of the MT of the first IAB node by the network device to the first IAB node is equivalent to sending the first threshold to the first IAB node.

B2: The first condition includes that a second measurement result is greater than or equal to a second threshold.

The second measurement result indicates communication quality of a communication link from the first IAB node to the second IAB node. The communication link from the first IAB node to the second IAB node may be understood as a link used by the first IAB node to send data to the second IAB node. The communication link from the first IAB node to the second IAB node is the same as or different from the communication link from the second IAB node to the first IAB node. The second measurement result may be obtained by the second IAB node by measuring a second measurement signal from the first IAB node. In other words, the second measurement result is a measurement result of the second IAB node. For example, the second measurement signal may be sent by the DU of the first IAB node to the MT of the second IAB node. For an implementation form of the second measurement signal, refer to the foregoing content of the first measurement signal.

After measuring the second measurement result, the second IAB node may determine whether the second measurement result is greater than or equal to the second threshold.

For a manner in which the second IAB node obtains the second threshold, refer to the foregoing content in which the second IAB node obtains the first threshold. Optionally, the first threshold is the same as or different from the second threshold. For example, when the communication link from the first IAB node to the second IAB node is the same as the communication link from the second IAB node to the first IAB node, the first threshold may be the same as the second threshold.

B3: The first condition includes that a first measurement result is greater than or equal to a first threshold, and a second measurement result is greater than or equal to a second threshold. When the first condition is the condition shown in B3, for a manner in which the second IAB node determines that the quality of communication between the second IAB node and the first IAB node meets the first condition, refer to the foregoing content of B1 and B2.

In a second possible implementation, if the second IAB node determines that quality of communication between the first IAB node and the third IAB node meets a second condition, the second IAB node may determine to send the first indication information to the first IAB node. The second condition may include any condition shown in the following C1 to C5.

C1: The second condition includes that a third measurement result is less than or equal to a third threshold.

The third measurement result indicates communication quality of a communication link from the third IAB node to the first IAB node. The communication link from the third IAB node to the first IAB node may be understood as a link used by the third IAB node to send data to the first IAB node. The third measurement result may be obtained by the first IAB node by measuring a third measurement signal from the third IAB node. In other words, the third measurement result is a measurement result of the first IAB node. For example, the third measurement signal may be sent by a DU of the third IAB node to the MT of the first IAB node. For an implementation form of the third measurement signal, refer to the foregoing content of the first measurement signal.

For example, the second IAB node may receive the third measurement result from the first IAB node, and determine that the third measurement result is less than or equal to the third threshold. For a manner in which the second IAB node obtains the third threshold, refer to the foregoing content of obtaining the first threshold. For example, the second IAB node may receive the third measurement result from the first IAB node through the network device. Alternatively, the MT of the second IAB node may receive the third measurement result from the DU of the first IAB node, and determine whether the third measurement result meets the third threshold. Alternatively, the second IAB node may receive fourth indication information from the first IAB node, and the fourth indication information indicates that the third measurement result is less than or equal to the third threshold. That the second IAB node receives the fourth indication information is equivalent to that the second IAB node determines that the third measurement result is less than or equal to the third threshold. For a manner in which the first IAB node obtains the third threshold, refer to the foregoing content in which the first IAB node obtains the first threshold.

C2: The second condition includes that a fourth measurement result is less than or equal to a fourth threshold.

The fourth measurement result indicates communication quality of a communication link from the first IAB node to the third IAB node. The communication link from the first IAB node to the third IAB node may be understood as a link used by the first IAB node to send data to the third IAB node. The communication link from the first IAB node to the third IAB node is the same as or different from the communication link from the third IAB node to the first IAB node. The fourth measurement result may be obtained by the third IAB node by measuring a fourth measurement signal from the first IAB node. In other words, the fourth measurement result is a measurement result of the third IAB node. The fourth measurement signal may be sent by the MT of the first IAB node to a DU of the third IAB node. For an implementation of the fourth measurement signal, refer to the foregoing content of the first measurement signal.

For example, the second IAB node may receive the fourth measurement result from the third IAB node, and determine that the fourth measurement result is less than or equal to the fourth threshold. For a manner in which the second IAB node obtains the fourth threshold, refer to the foregoing content in which the second IAB node obtains the first threshold. For example, the second IAB node may receive the fourth measurement result from the third IAB node through the network device, or the second IAB node may receive the fourth measurement result from the third IAB node through the first IAB node, so that the second IAB node determines that the fourth measurement result is less than or equal to the fourth threshold.

Alternatively, the second IAB node may receive fifth indication information from the third IAB node, and the fifth indication information indicates that the fourth measurement result is less than or equal to the fourth threshold. That the second IAB node receives the fifth indication information is equivalent to that the second IAB node determines that the fourth measurement result is less than or equal to the fourth threshold. For a manner in which the third IAB node obtains the fourth threshold, refer to the foregoing content in which the first IAB node obtains the first threshold. For a manner in which the second IAB node receives the fifth indication information from the third IAB node, refer to the foregoing content in which the second IAB node receives the fourth measurement result from the third IAB node. Optionally, the third threshold is the same as or different from the fourth threshold. For example, when the communication link from the third IAB node to the first IAB node is the same as the communication link from the first IAB node to the third IAB node, the third threshold may be the same as the fourth threshold.

C3: The second condition includes a beam failure between the first IAB node and the third IAB node.

The beam failure between the first IAB node and the third IAB node may be that when the first IAB node (specifically, a physical layer of the first IAB node) determines, within duration of a beam failure detection timer, that a quantity of times that a measurement result of measuring a measurement signal from the third IAB node is less than or equal to the fifth threshold is equal to a first quantity of times, the first IAB node may determine the beam failure. The first quantity of times is, for example, a maximum quantity of consecutive beam failures (beamFailureInstanceMaxCount). The first quantity of times may be prestored in the first IAB node. For example, the first quantity of times is protocol-preconfigured in the first IAB node, or may be agreed on in the first IAB node by the IAB system. Alternatively, the first quantity of times may be received by the first IAB node from the network device. For example, when detecting the beam failure, the first IAB node may send sixth indication information to the second IAB node, and the sixth indication information indicates the beam failure between the first IAB node and the third IAB node. That the second IAB node receives the sixth indication information is equivalent to that the second IAB node determines the beam failure between the first IAB node and the third IAB node.

Alternatively, the beam failure between the first IAB node and the third IAB node is, for example, that when the third IAB node (specifically, a physical layer of the third IAB node) determines, within the duration of the beam failure detection timer, that a quantity of times that a measurement result of measuring measurement information from the first IAB node is less than or equal to the fifth threshold is equal to the first quantity of times, the third IAB node may determine the beam failure. For a manner in which the third IAB node obtains the first quantity of times, refer to the foregoing content in which the first IAB node obtains the first quantity of times. In this case, when detecting the beam failure, the third IAB node may send the sixth indication information to the second IAB node. For a meaning of the sixth indication information, refer to the foregoing descriptions. That the second IAB node receives the sixth indication information is equivalent to that the second IAB node determines the beam failure between the first IAB node and the third IAB node.

C4: The second condition includes a communication link fault between the first IAB node and the third IAB node.

For example, if a quantity of times of retransmission performed by the first IAB node to the third IAB node reaches a second quantity of times, the first IAB node may determine the communication link fault between the first IAB node and the third IAB node. The second quantity of times may be prestored in the first IAB node. For example, the second quantity of times is protocol-preconfigured in the first IAB node, or may be agreed on in the first IAB node by the IAB system. Alternatively, the second quantity of times may be received by the first IAB node from the network device. In this case, the first IAB node may send seventh indication information to the second IAB node, and the seventh indication information indicates the communication link fault between the first IAB node and the third IAB node. That the second IAB node receives the seventh indication information is equivalent to that the second IAB node determines the communication link fault between the first IAB node and the third IAB node.

Alternatively, if a quantity of times of retransmission performed by the third IAB node to the first IAB node reaches a second quantity of times, the third IAB node may determine the communication link fault between the first IAB node and the third IAB node. The second quantity of times may be prestored in the third IAB node or the first IAB node. For example, the second quantity of times is protocol-preconfigured in the third IAB node or the first IAB node, or may be agreed on in the third IAB node or the first IAB node by the IAB system. Alternatively, the second quantity of times may be received by the third IAB node from the network device. In this case, the third IAB node may send seventh indication information to the second IAB node, and the seventh indication information indicates the communication link fault between the first IAB node and the third IAB node. That the second IAB node receives the seventh indication information is equivalent to that the second IAB node determines the communication link fault between the first IAB node and the third IAB node.

C5: The second condition includes two or more conditions of C1 to C4. In this case, for a manner in which the second IAB node determines that the quality of communication between the first IAB node and the third IAB node meets the second condition, refer to the foregoing content described in C1 to C4.

In a third possible implementation, the second IAB node determines that quality of communication between the first IAB node and the second IAB node meets a first condition, and the second IAB node determines that quality of communication between the first IAB node and the third IAB node meets a second condition.

In a fourth possible implementation, if the second IAB node receives second indication information from the network device, and the second indication information indicates the DU of the second IAB node to establish a connection to a parent node of the second IAB node, the second IAB node may determine to send the first indication information to the first IAB node. The parent node of the second IAB node includes the first IAB node.

Optionally, the second indication information may be carried in the configuration information of the DU of the second IAB node. The network device may send the configuration information of the DU of the second IAB node to the second IAB node. Correspondingly, that the second IAB node receives the configuration information of the DU of the second IAB node from the network device is equivalent to that the first IAB node receives the second indication information. Alternatively, the second indication information may be carried in higher layer signaling. The network device may send the higher layer signaling to the second IAB node. Correspondingly, that the second IAB node receives the higher layer signaling from the network device is equivalent to that the first IAB node receives the second indication information. The higher layer signaling is, for example, RRC signaling.

Trigger case 2: The first IAB node receives first indication information from the third IAB node. For a meaning of the first indication information, refer to the foregoing descriptions. Optionally, the first indication information may be carried in a backhaul adaptation protocol control protocol data unit. The third IAB node sends the first indication information to the first IAB node through the backhaul adaptation protocol control protocol data unit.

In a first possible implementation, if the third IAB node determines that quality of communication between the first IAB node and the second IAB node meets a first condition, the third IAB node may send the first indication information to the first IAB node. For a meaning of the first condition, refer to the foregoing described content. Content in which the third IAB node determines that the quality of communication between the first IAB node and the second IAB node meets the first condition varies with the first condition. The following provides separate descriptions.

D1: When the first condition is the condition shown in B1, the third IAB node may receive the first measurement result from the first IAB node, or may receive the first measurement result from the first IAB node through the network device, and determine that the first measurement result is greater than or equal to the first threshold. Alternatively, the third IAB node receives the third indication information from the first IAB node. For a meaning of the third indication information, refer to the foregoing descriptions. That the third IAB node receives the third indication information is equivalent to that the third IAB node determines that the first measurement result is greater than or equal to the first threshold. For a manner in which the third IAB node obtains the first threshold, refer to the foregoing content in which the first IAB node obtains the first threshold.

D2: When the first condition is the condition shown in B2, the third IAB node may receive the second measurement result from the second IAB node, or may receive the second measurement result from the second IAB node through the network device, and determine that the second measurement result is greater than or equal to the second threshold. Alternatively, the third IAB node receives eighth indication information from the second IAB node, and the eighth indication information indicates that the second measurement result is greater than or equal to the second threshold. That the third IAB node receives the eighth indication information is equivalent to that the third IAB node determines that the second measurement result is greater than or equal to the second threshold.

For a manner in which the third IAB node obtains the second threshold, refer to the foregoing content in which the second IAB node obtains the second threshold.

D3: When the first condition is the condition shown in B3, for a manner in which the third IAB node determines that the first condition is met, refer to the foregoing content described in D1 and D2.

In a second possible implementation, if the third IAB node determines that quality of communication between the first IAB node and the third IAB node meets a second condition, the third IAB node may determine to send the first indication information to the first IAB node. For a meaning of the second condition, refer to the foregoing descriptions.

E1: When the second condition is the condition shown in C1, the third IAB node may receive the third measurement result from the first IAB node, or receives the third measurement result from the first IAB node through the network device, and determines that the third measurement result is less than or equal to the third threshold. For a manner in which the third IAB node obtains the third threshold, refer to the foregoing manner in which the first IAB node obtains the first threshold. Alternatively, the third IAB node receives the fourth indication information from the first IAB node. For a meaning of the fourth indication information, refer to the foregoing descriptions. That the third IAB node receives the fourth indication information is equivalent to that the third IAB node determines that the third measurement result is less than or equal to the third threshold.

E2: When the second condition is the condition shown in C2, the third IAB node may directly measure the fourth measurement result, and determine that the fourth measurement result is less than or equal to the fourth threshold. For a manner in which the third IAB node obtains the fourth threshold, refer to the foregoing content in which the first IAB node obtains the first threshold.

E3: When the second condition is the condition shown in C3, the third IAB node may detect the beam failure by itself, or the third IAB node receives the sixth indication information from the first IAB node. For a meaning of the sixth indication information, refer to the foregoing descriptions. Receiving the sixth indication information by the third IAB node is equivalent to determining the beam failure between the first IAB node and the third IAB node.

E4: When the second condition is the condition shown in C4, the third IAB node may determine, by itself, the communication link fault between the first IAB node and the third IAB node. For a manner of determining the communication link fault between the first IAB node and the third IAB node, refer to the foregoing content. Alternatively, the third IAB node may receive the seventh indication information from the first IAB node. For a meaning of the seventh indication information, refer to the foregoing descriptions. Receiving the seventh indication information by the third IAB node is equivalent to determining the communication link fault between the first IAB node and the third IAB node.

E5: When the second condition is the condition shown in C5, for a manner in which the second IAB node determines that the second condition is met, refer to the foregoing content of E1 to E4. Details are not described herein again.

In a third possible implementation, if the third IAB node determines that quality of communication between the first IAB node and the second IAB node meets a first condition, and determines that quality of communication between the first IAB node and the third IAB node meets a second condition, the third IAB node may determine to send the first indication information to the first IAB node. In this case, for a manner in which the third IAB node determines that the first condition and the second condition are met, refer to the foregoing described content. For content of the first condition and the second condition, refer to the foregoing descriptions.

In a fourth possible implementation, if the third IAB node may receive second indication information from the network device, where for a meaning of the second indication information, refer to the foregoing descriptions, the third IAB node determines to send the first indication information to the first IAB node.

Trigger case 3: The first IAB node receives first indication information from the network device. For a meaning of the first indication information, refer to the foregoing descriptions. Optionally, the first indication information may be carried in RRC signaling. The network device sends the RRC signaling to the first IAB node. Correspondingly, that the first IAB node receives the RRC signaling from the network device is equivalent to that the first indication information is received.

In a first possible implementation, if the network device determines that quality of communication between the first IAB node and the second IAB node meets a first condition, the network device may determine to send the first indication information to the first IAB node. For the quality of communication between the first IAB node and the second IAB node and a meaning of the first condition, refer to the foregoing described content. Content in which the network device determines that the quality of communication between the first IAB node and the second IAB node meets the first condition varies with the first condition. The following provides separate descriptions.

F1: When the first condition is the condition shown in B1, the network device may receive the first measurement result from the first IAB node, or may receive the first measurement result from the first IAB node through the third IAB node, and determine that the first measurement result is greater than or equal to the first threshold. The first threshold may be configured by the IAB system or protocol-configured in the network device.

Alternatively, that the network device receives the third indication information from the first IAB node is equivalent to that the network device determines that the first measurement result is greater than or equal to the first threshold. For a meaning of the third indication information, refer to the foregoing descriptions.

F2: When the first condition is the condition shown in B2, the network device may receive the second measurement result from the second IAB node, or may receive the second measurement result from the second IAB node through the fourth IAB node, and determine that the second measurement result is greater than or equal to the second threshold. The second threshold may be configured by the IAB system or protocol-configured in the network device.

Alternatively, that the network device receives the eighth indication information from the second IAB node is equivalent to that the network device determines that the second measurement result is greater than or equal to the second threshold. For a meaning of the eighth indication information, refer to the foregoing descriptions.

F3: When the first condition is the condition shown in B3, for a manner in which the network device determines that the first condition is met, refer to the foregoing descriptions.

In a second possible implementation, if the network device determines that quality of communication between the first IAB node and the third IAB node meets a second condition, the network device may send the first indication information to the first IAB node. For the quality of communication between the first IAB node and the third IAB node and a meaning of the second condition, refer to the foregoing descriptions.

G1: When the second condition is the condition shown in C1, the network device may receive the third measurement result from the first IAB node, or receives the third measurement result from the first IAB node through the third IAB node, and determines that the third measurement result is less than or equal to the third threshold. For a manner in which the network device obtains the third threshold, refer to the foregoing content in which the network device obtains the first threshold.

Alternatively, the network device receives the fourth indication information from the first IAB node. For a meaning of the fourth indication information, refer to the foregoing descriptions. That the network device receives the fourth indication information is equivalent to that the network device determines that the third measurement result is less than or equal to the third threshold.

G2: When the second condition is the condition shown in C2, the network device may receive the fourth measurement result from the third IAB node, and determine that the fourth measurement result is less than or equal to the fourth threshold. For a manner in which the network device obtains the fourth threshold, refer to the foregoing content in which the network device obtains the first threshold.

Alternatively, the network device may receive the fifth indication information from the third IAB node. For a meaning of the fifth indication information, refer to the foregoing descriptions. That the network device receives the fifth indication information is equivalent to that the network device determines that the fourth measurement result is less than or equal to the fourth threshold.

G3: When the second condition is the condition shown in C3, the network device receives the sixth indication information from the first IAB node or the third IAB node. For a meaning of the sixth indication information, refer to the foregoing descriptions. That the network device receives the sixth indication information is equivalent to that the network device determines the beam failure the beam between the first IAB node and the third IAB node.

G4: When the second condition is the condition shown in C4, the network device may receive the seventh indication information from the third IAB node or the first IAB node. For a meaning of the seventh indication information, refer to the foregoing descriptions. Receiving the seventh indication information by the network device is equivalent to determining the communication link fault between the first IAB node and the third IAB node.

G5: When the second condition is the condition shown in C5, for a manner in which the network device determines that the second condition is met, refer to the foregoing content of G1 to G4.

In a third possible implementation, if the network device determines that quality of communication between the first IAB node and the second IAB node meets a first condition, and determines that quality of communication between the first IAB node and the third IAB node meets a second condition, the third IAB node may send the first indication information to the first IAB node.

Trigger case 4: The first IAB node determines that a preconfigured random access trigger condition is met. The random access trigger condition may be preconfigured by the IAB system or protocol-preconfigured in the first IAB node. The random access trigger condition may include at least one of the following 1 to 4.

Random access trigger condition 1: The MT of the second IAB node and the first IAB node have completed the second random access process.

That the MT of the second IAB node and the first IAB node have completed the second random access process may also be specifically described as that the MT of the second IAB node and the DU of the first IAB node have completed the second random access process, or may be understood as that the MT of the second IAB node establishes a connection to the DU of the first IAB node.

Random access trigger condition 2: Quality of communication between the first IAB node and the second IAB node meets a first condition. Content in which the first IAB node determines that the quality of communication between the first IAB node and the second IAB node meets the first condition varies with content of the first condition. The following provides separate descriptions.

H1: When the first condition is the condition shown in B1, the first IAB node may measure the first measurement signal to obtain the first measurement result, and determine that the first measurement result is greater than or equal to the first threshold. For a manner in which the first IAB node obtains the first threshold, refer to the foregoing descriptions.

H2: When the first condition is the condition shown in B2, the first IAB node may receive the second measurement result from the second IAB node, or the first IAB node receives the second measurement result from the second IAB node through the network device, and determines that the second measurement result is greater than or equal to the second threshold. For a manner in which the first IAB node obtains the second threshold, refer to the content in which the first IAB node obtains the second threshold. Alternatively, the first IAB node may receive eighth indication information from the second IAB node, and the eighth indication information indicates that the second measurement result is greater than or equal to the second threshold. Receiving the eighth indication information by the first IAB node is equivalent to determining that the second measurement result is greater than or equal to the second threshold.

H3: When the first condition is the condition shown in B3, for a manner in which the first IAB node determines that the first measurement result is greater than or equal to the first threshold and that the second measurement result is greater than or equal to the second threshold, refer to the foregoing content of H1 and H2.

Random access trigger condition 3: Quality of communication between the first IAB node and the third IAB node meets a second condition. For content of the second condition, refer to the foregoing descriptions. Content in which the first IAB node determines that the quality of communication between the first IAB node and the third IAB node meets the second condition varies with content of the second condition. The following provides separate descriptions.

K1: When the second condition is the condition shown in C1, the first IAB node may measure the third measurement signal to obtain the third measurement result, and determine that the third measurement result is less than or equal to the third threshold. For a manner in which the first IAB node obtains the third threshold, refer to the foregoing content in which the first IAB node obtains the first threshold.

K2: When the second condition is the condition shown in C2, the first IAB node may receive the fourth measurement result from the third IAB node, or the first IAB node receives the fourth measurement result from the third IAB node through the network device, and determines that the fourth measurement result is less than or equal to the fourth threshold. For a manner in which the first IAB node obtains the fourth threshold, refer to the foregoing content in which the first IAB node obtains the first threshold. Alternatively, the first IAB node may receive the fifth indication information from the third IAB node. For a meaning of the fifth indication information, refer to the foregoing descriptions. That the first IAB node receives the fifth indication information is equivalent to that the first IAB node determines that the fourth measurement result is less than or equal to the fourth threshold.

K3: When the second condition is the condition shown in C3, the first IAB node may detect, by itself, the beam failure between the first IAB node and the third IAB node. Alternatively, the first IAB node receives the sixth indication information from the third IAB node. For a meaning of the sixth indication information, refer to the foregoing descriptions. Receiving the sixth indication information by the first IAB node is equivalent to determining that the beam failure between the first IAB node and the third IAB node.

K4: When the second condition is the condition shown in C4, the first IAB node may detect the communication link fault by itself. Alternatively, the first IAB node may receive the seventh indication information from the third IAB node. For a meaning of the seventh indication information, refer to the foregoing descriptions. Receiving the seventh indication information by the first IAB node is equivalent to determining the communication link fault between the first IAB node and the third IAB node.

K5: When the second condition is the condition shown in C5, for content in which the first IAB node determines that the second condition shown in C5 is met, refer to the foregoing content of K1 to K4.

Random access trigger condition 4: Quality of communication between the first IAB node and the second IAB node meets a first condition, and quality of communication between the first IAB node and the third IAB node meets a second condition. For content in which the first IAB node determines that the first condition and the second condition are met, refer to the foregoing descriptions.

In the trigger case 4, in comparison with the other trigger cases 1 to 4, the first IAB node does not need to receive an indication from another device, and may initiate random access to the second IAB node in a timely manner. This reduces impact, on the IAB system, caused by deterioration of link communication quality or a link exception. In addition, in the trigger case 4, the first IAB node does not need to receive indication information from another device. This helps reduce signaling exchange in the IAB system.

Optionally, the foregoing random access trigger condition 1 may be combined with any one of the foregoing trigger case 1 to trigger case 3. In other words, when the first IAB node determines that the random access trigger condition 1 is met or any one of the trigger case 1 to the trigger case 3 is met, the first IAB node may send the first random access request to the second IAB node. The following uses examples for description. For example, if the first IAB node receives the first indication information from the second IAB node (that is, the trigger case 1 is met), and determines that the random access trigger condition 1 is met, the first IAB node may send the first random access request to the second IAB node. Alternatively, if the first IAB node receives the first indication information from the third IAB node (that is, the trigger case 2 is met), and determines that the random access trigger condition 1 is met, the first IAB node may send the first random access request to the second IAB node. Alternatively, if the first IAB node receives the first indication information from the network device (that is, the trigger case 3 is met), and determines that the random access trigger condition 1 is met, the first IAB node may send the first random access request to the second IAB node.

In this embodiment of this application, the first IAB node may initiate first random access to the second IAB node in a specific trigger case. For example, when quality of a channel between the first IAB node and the second IAB node is good, or quality of a channel between the first IAB node and the third IAB node is poor, the MT of the first IAB node may initiate a random access process to the DU of the second IAB node, so that the DU of the second IAB node may provide an access service for the MT of the first IAB node, that is, the DU of the IAB node may be configured to communicate with an upstream node of the IAB node, or the MT part of the first IAB node may establish a wireless connection to the DU of the second IAB node. In this way, establishing a connection when not required can be avoided; and when reliability of the IAB system is ensured, resources consumed for transmission between the MT of the first IAB node and the DU of the second IAB node can also be relatively reduced.

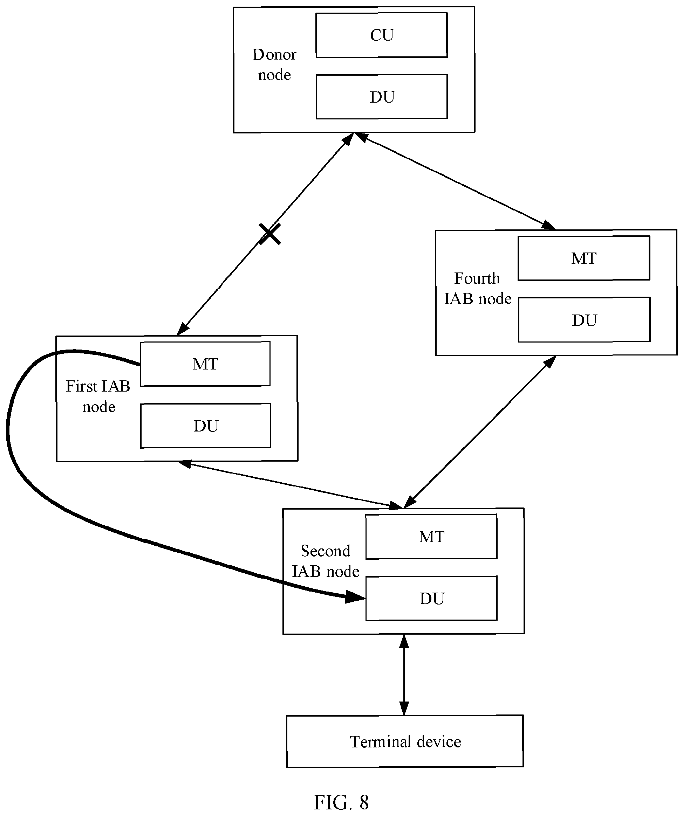

The following uses a diagram of an architecture of an IAB system shown in FIG. 8 as an example, to analyze beneficial effect of the solutions in embodiments of this application. As shown in FIG. 8, the IAB system includes a terminal device, a first IAB node, a second IAB node, a fourth IAB node, and a donor node. In FIG. 8, an example in which parent nodes of the first IAB node and the fourth IAB node include the donor node, and parent nodes of the second IAB node include the first IAB node and the fourth IAB node is used for illustration.

If there is a communication link fault between the first IAB node and the donor node (in FIG. 8, "×" indicates a communication fault), an MT of the first IAB node may establish a connection to a DU of the second IAB node by using the method in this embodiment of this application. In this way, the MT of the first IAB node may forward, to the DU of the second IAB node, uplink data to be transmitted to the donor node, the DU of the second IAB node may forward the uplink data to an MT of the second IAB node, the MT of the second IAB node forwards the uplink data to a DU of the fourth IAB node, the DU of the fourth IAB node forwards the uplink data to an MT of the fourth IAB node, and the MT of the fourth IAB node sends the uplink data to the donor node. It can be learned that, according to the method in this embodiment of this application, the communication link in the IAB system can be increased, and communication reliability of the IAB system can be improved.

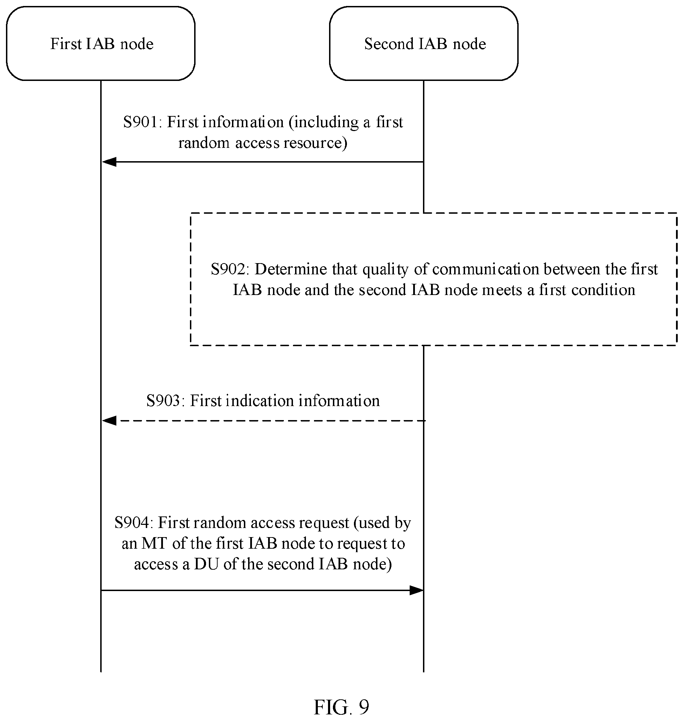

FIG. 9 is a schematic flowchart of a communication method according to an embodiment of this application. In FIG. 9, an example in which a first IAB node receives first information in the foregoing manner 1 and the first IAB node sends a first random access request to a second IAB node in the trigger case 1 is used for description. The schematic flowchart shown in FIG. 9 includes the following steps.

S901: The second IAB node sends the first information to the first IAB node. Correspondingly, the first IAB node receives the first information from a network device.

For example, for S902, refer to the foregoing content of S701 in FIG. 7. For example, the first information may include a first random access resource. For a meaning of the first information, a meaning of the first random access resource, and a manner in which the second IAB node sends the first information to the first IAB node, refer to the foregoing content of S701.

S902: The second IAB node determines that quality of communication between the first IAB node and the second IAB node meets a first condition.

For example, for S902, refer to the foregoing content described in FIG. 7. For example, for the first condition and a manner in which the second IAB node determines that the first condition is met, refer to the foregoing content described in FIG. 7.

S903: The second IAB node sends first indication information to the first IAB node. Correspondingly, the first IAB node receives the first indication information from the second IAB node.

For example, for S903, refer to the foregoing content described in FIG. 7. For example, for a meaning of the first indication information and a manner in which the second IAB node sends the first indication information to the first IAB node, refer to the foregoing content described in FIG. 7.

S904: The first IAB node sends the first random access request to the second IAB node. Correspondingly, the second IAB node receives the first random access request from the first IAB node. For example, the first random access request is used by an MT of the first IAB node to request to access a DU of the second IAB node.

For S904, refer to the foregoing content of S702 in FIG. 7. For example, for a meaning of the first random access request and a manner in which the first IAB node sends the first random access request to the second IAB node, refer to the foregoing content of S702.

In an example, S902 and S903 are an example of triggering the first IAB node to send the first random access request to the second IAB node. Therefore, S902 and S903 are optional steps, and are shown by using dashed lines in FIG. 9.

In this embodiment of this application, a connection may be established between the MT of the first IAB node and the DU of the second IAB node, so that an IAB system may include more communication links. This improves communication reliability of the IAB system. In addition, the second IAB node triggers the MT of the first IAB node to initiate random access to the DU of the second IAB node when determining that quality of communication between the first IAB node and the second IAB node is good. This helps reduce a case in which the MT of the first IAB node unsuccessfully initiates random access to the DU of the second IAB node.

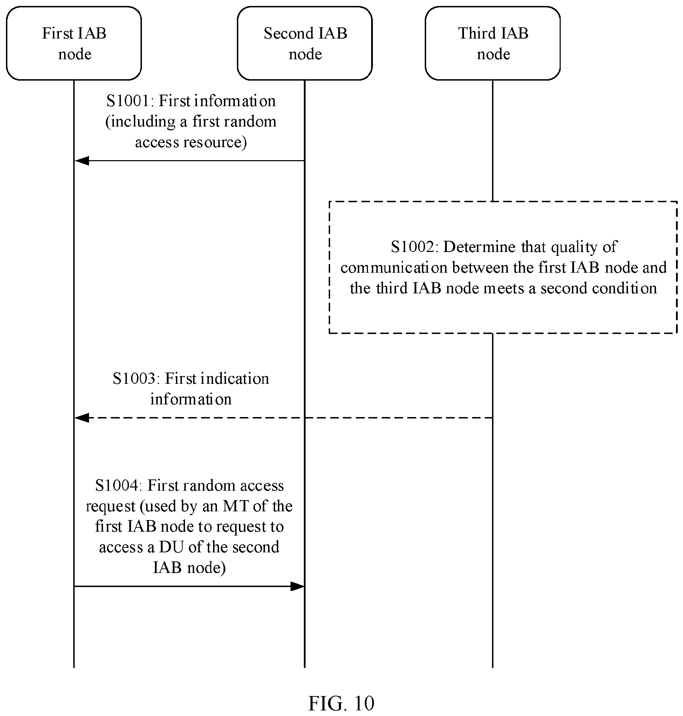

FIG. 10 is a schematic flowchart of a communication method according to an embodiment of this application. In FIG. 10, an example in which a first IAB node receives first information in the foregoing manner 1 and the first IAB node sends a first random access request to a second IAB node in the trigger case 2 is used for description. The schematic flowchart shown in FIG. 10 includes the following steps.

S1001: The second IAB node sends the first information to the first IAB node. Correspondingly, the first IAB node receives the first information from the second IAB node. For example, the first information may include a first random access resource.

For example, for S1001, refer to the foregoing step S701 in FIG. 7. For example, for a meaning of the first information, a meaning of the first random access resource, and a manner in which the second IAB node sends the first information to the first IAB node, refer to the foregoing content of S701.

S1002: A third IAB node determines that quality of communication between the first IAB node and the third IAB node meets a second condition.

For example, for S1002, refer to the foregoing content described in FIG. 7. For example, for the second condition and a manner in which the third IAB node determines that the second condition is met, refer to the foregoing descriptions.

S1003: The third IAB node sends first indication information to the first IAB node. Correspondingly, the first IAB node receives the first indication information from the third IAB node.

For example, for S1003, refer to the foregoing content described in FIG. 7. For example, for a meaning of the first indication information and a manner in which the third IAB node sends the first indication information to the first IAB node, refer to the foregoing content described in FIG. 7.

In an example, S1002 and S1003 are an example of triggering the first IAB node to send the first random access request to the second IAB node. Therefore, S1002 and S1003 are optional steps, and are shown by using dashed lines in FIG. 10.

S1004: The first IAB node sends the first random access request to the second IAB node. Correspondingly, the second IAB node receives the first random access request from the first IAB node.

For example, for S1004, refer to the foregoing content of S702 in FIG. 7. For example, for a meaning of the first random access request and a manner in which the first IAB node sends the first random access request to the second IAB node, refer to the foregoing content of S702. For example, the first random access request is used by an MT of the first IAB node to request to access a DU of the second IAB node.

In this embodiment of this application, a connection may be established between the MT of the first IAB node and the DU of the second IAB node, so that an IAB system may include more communication links. This improves communication reliability of the IAB system. In addition, when determining that quality of communication with the first IAB node is poor, the third IAB node may trigger the MT of the first IAB node to initiate random access to the DU of the second IAB node. On one hand, the IAB system includes more communication links, so that reliability of the IAB system is improved. On the other hand, the quality of communication between the third IAB node and the first IAB node is poor, so that a probability that the communication link between the MT of the first IAB node and the DU of the second IAB node is used is high. This reduces a case in which the communication link between the MT of the first IAB node and the DU of the second IAB node is not used, and helps improve resource utilization of the IAB system.

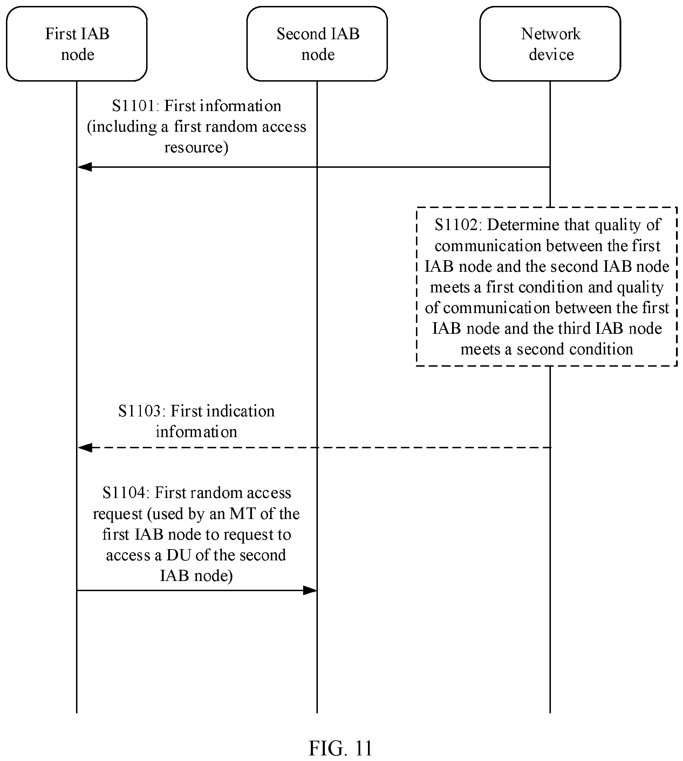

FIG. 11 is a schematic flowchart of a communication method according to an embodiment of this application. In FIG. 11, an example in which a first IAB node receives first information in the foregoing manner 2 and the first IAB node sends a first random access request to a second IAB node in the trigger case 3 is used for description. The schematic flowchart shown in FIG. 11 includes the following steps.

S1101: A network device sends the first information to the first IAB node. Correspondingly, the first IAB node receives the first information from the network device. For example, the first information may include a first random access resource.

For example, for S1101, refer to the foregoing content of S701 in FIG. 7. For example, for a meaning of the first information, a meaning of the first random access resource, and a manner in which the network device sends the first information to the first IAB node, refer to the foregoing content of S701.

S1102: The network device determines that quality of communication between the first IAB node and the second IAB node meets a first condition and quality of communication between the first IAB node and a third IAB node meets a second condition.

For example, for S1102, refer to the foregoing content described in FIG. 7. For example, for a meaning of the first condition, a meaning of the second condition, a manner in which the network device determines that the quality of communication between the first IAB node and the second IAB node meets the first condition, and a manner in which the quality of communication between the first IAB node and the third IAB node meets the second condition, refer to the foregoing content in FIG. 7.

S1103: The network device sends first indication information to the first IAB node. Correspondingly, the first IAB node receives the first indication information from the network device.

For example, for S1103, refer to the foregoing content described in FIG. 7. For example, for a meaning of the first indication information and content in which the network device sends the first indication information to the first IAB node, refer to the foregoing content in FIG. 7.

In an example, S1102 and S1103 are an example of triggering the first IAB node to send the first random access request to the second IAB node. Therefore, S1102 and S1103 are optional steps, and are shown by using dashed lines in FIG. 11.

S1104: The first IAB node sends the first random access request to the second IAB node. Correspondingly, the second IAB node receives the first random access request from the first IAB node. For example, the first random access request is used by an MT of the first IAB node to request to access a DU of the second IAB node.

For example, for S1104, refer to the foregoing content of S702 in FIG. 7. For example, for a meaning of the first random access request and a manner in which the first IAB node sends the first random access request to the second IAB node, refer to the foregoing content of S702.

In this embodiment of this application, a connection may be established between the MT of the first IAB node and the DU of the second IAB node, so that an IAB system may include more communication links. This improves communication reliability of the IAB system. In addition, when determining that the quality of communication with the first IAB node is poor, the third IAB node may trigger the MT of the first IAB node to initiate random access to the DU of the second IAB node, so that the IAB system includes more communication links. This improves reliability of the IAB system. When the network device determines that the quality of communication between the first IAB node and the second IAB node is good, and the quality of communication between the third IAB node and the first IAB node is poor, the network device triggers the MT of the first IAB node to initiate random access to the DU of the second IAB node, so that reliability of the communication link established by the MT of the first IAB node to the DU of the second IAB node is high, and a possibility that the communication link is used is higher.

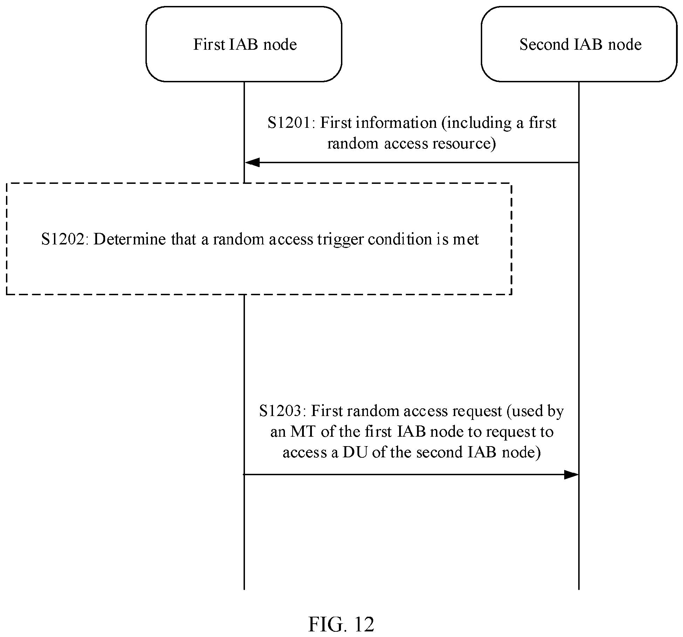

FIG. 12 is a schematic flowchart of a communication method according to an embodiment of this application. In FIG. 12, an example in which a first IAB node receives first information in the foregoing manner 1 and the first IAB node sends a first random access request to a second IAB node in the trigger case 4 is used for description. The schematic flowchart shown in FIG. 12 includes the following steps.

S1201: The second IAB node sends the first information to the first IAB node. Correspondingly, the first IAB node receives the first information from the second IAB node. For example, the first information includes a first random access resource.

For example, for S1201, refer to the foregoing content of S701 in FIG. 7. For example, for content of the first information and content of the first random access resource, refer to the foregoing content of S701.

S1202: The first IAB node determines that a random access trigger condition is met.

For example, for S1202, refer to the foregoing content described in FIG. 7. For example, for content of the random access trigger condition and content in which the first IAB node determines that the random access trigger condition is met, refer to the foregoing content described in FIG. 7.

In an example, S1202 is an example of triggering the first IAB node to send the first random access request to the second IAB node. Therefore, S1202 is an optional step, and is shown by using dashed lines in FIG. 12.

S1203: The first IAB node sends the first random access request to the second IAB node. Correspondingly, the second IAB node receives the first random access request from the first IAB node. For example, the first random access request is used by an MT of the first IAB node to request to access a DU of the second IAB node.

For example, for S1203, refer to the foregoing content of S702 in FIG. 7. For example, for a meaning of the first random access request and a manner in which the first IAB node sends the first random access request to the second IAB node, refer to the foregoing content of S702.

In this embodiment of this application, when determining that the random access trigger condition is met, the first IAB node may initiate random access to the second IAB node, and another device does not need to indicate the first IAB node to initiate random access. This helps reduce interaction between the first IAB node and the another device. In addition, the first IAB node does not need to wait for an indication from the another device, so that the first IAB node can send the first random access request to the second IAB node in a timely manner.

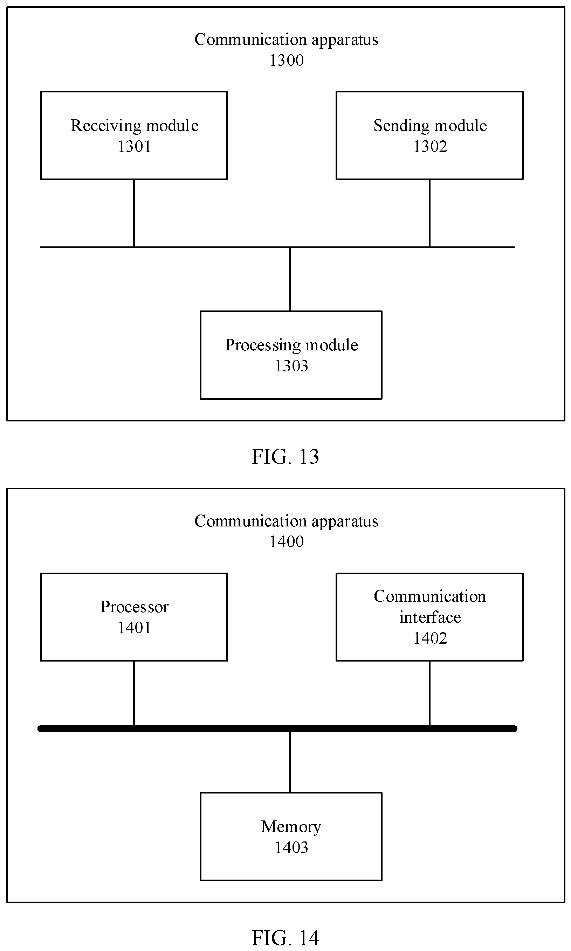

FIG. 13 is a diagram of a structure of a communication apparatus according to an embodiment of this application.

In a first possible embodiment, as shown in FIG. 13, the communication apparatus 1300 includes a receiving module 1301 and a sending module 1302. Optionally, the communication apparatus 1300 further includes a processing module 1303. In this embodiment of this application, the communication apparatus 1300 may be configured to implement a function of the foregoing first IAB node, for example, a function of the first IAB node in any one of FIG. 7, FIG. 9, and FIG. 12. Correspondingly, the communication apparatus 1300 may implement steps performed by the first IAB node.

For example, the communication apparatus 1300 may be configured to implement the function of the first IAB node in FIG. 7. For example, the receiving module 1301 may be configured to perform S701, and the sending module 1302 may be configured to perform S702. Optionally, the processing module 1303 may be configured to: control the receiving module 1301 to perform S701, and control the sending module 1302 to perform S702. The processing module 1303 may be further configured to determine that quality of communication between the first IAB node and a second IAB node meets a first condition, and/or quality of communication between the first IAB node and a third IAB node meets a second condition.

For another example, the communication apparatus 1300 may be configured to implement the function of the first IAB node in FIG. 9. For example, the receiving module 1301 may be configured to perform S901, and the sending module 1302 may be configured to perform S904. Optionally, the receiving module 1301 is further configured to perform S903.

For another example, the communication apparatus 1300 may be configured to implement the function of the first IAB node in FIG. 10. For example, the receiving module 1301 may be configured to perform S1001, and the sending module 1302 may be configured to perform S1004. Optionally, the receiving module 1301 is further configured to perform S1003.

For another example, the communication apparatus 1300 may be configured to implement the function of the first IAB node in FIG. 11. For example, the receiving module 1301 may be configured to perform S1101, and the sending module 1302 may be configured to perform S1104. Optionally, the receiving module 1301 is further configured to perform S1103.

For another example, the communication apparatus 1300 may be configured to implement the function of the first IAB node in FIG. 12. For example, the receiving module 1301 may be configured to perform S1201, and the sending module 1302 may be configured to perform S1203. Optionally, the processing module 1303 is further configured to perform S1202.

In a second possible embodiment, still as shown in FIG. 13, the communication apparatus 1300 includes a receiving module 1301. Optionally, the communication apparatus 1300 further includes a sending module 1302 and a processing module 1303. In this embodiment of this application, the communication apparatus 1300 may be configured to implement a function of the foregoing second IAB node, for example, a function of the second IAB node in any one of FIG. 7, FIG. 9, and FIG. 12. Correspondingly, the communication apparatus 1300 may implement steps performed by the second IAB node.

For example, the communication apparatus 1300 may be configured to implement the function of the second IAB node in FIG. 7. For example, the receiving module 1301 may be configured to perform S702. Optionally, the processing module 1303 may be configured to control the receiving module 1301 to perform S702, and may be further configured to determine that quality of communication between a first IAB node and the second IAB node meets a first condition, and/or quality of communication between the first IAB node and a third IAB node meets a second condition. Optionally, the sending module 1302 may be configured to send first information to the first IAB node.

For another example, the communication apparatus 1300 may be configured to implement the function of the second IAB node in FIG. 9. For example, the sending module 1302 may be configured to perform S902, and the receiving module 1301 may be configured to perform S904. Optionally, the sending module 1302 may be further configured to perform S903, and the processing module 1303 may be further configured to perform step S902.

For another example, the communication apparatus 1300 may be configured to implement the function of the second IAB node in FIG. 10. For example, the sending module 1302 may be configured to perform S1001, and the receiving module 1301 may be configured to perform S1004.

For another example, the communication apparatus 1300 may be configured to implement the function of the second IAB node in FIG. 11. For example, the receiving module 1301 may be configured to perform S1104.

For another example, the communication apparatus 1300 may be configured to implement the function of the second IAB node in FIG. 12. For example, the sending module 1302 is configured to perform S1201, and the receiving module 1301 may be configured to perform S1203.

In a third possible embodiment, still as shown in FIG. 13, the communication apparatus 1300 includes a sending module 1302. Optionally, the communication apparatus 1300 further includes a receiving module 1301 and a processing module 1303. In this embodiment of this application, the communication apparatus 1300 may be configured to implement a function of the foregoing network device, for example, a function of any network device in FIG. 7 or FIG. 11. Correspondingly, the communication apparatus 1300 may implement steps performed by the network device.

For example, the communication apparatus 1300 may be configured to implement the function of the network device in FIG. 7. Optionally, the sending module 1302 is configured to send first information to a first IAB node. The receiving module 1301 is configured to receive a first measurement result and/or a third measurement result. The processing module 1303 may be configured to control the sending module 1302 and the receiving module 1301 to perform corresponding functions. The processing module 1303 may be further configured to determine that quality of communication between the first IAB node and a second IAB node meets a first condition, and/or quality of communication between the first IAB node and a third IAB node meets a second condition.

For another example, the communication apparatus 1300 may be configured to implement the function of the network device in FIG. 11. For example, the sending module 1302 is configured to perform S1101 and S1103, and the processing module 1303 is configured to perform S1102.

FIG. 14 is a diagram of a structure of a communication apparatus according to an embodiment of this application. As shown in FIG. 14, the communication apparatus 1400 includes a processor 1401 and a communication interface 1402. The processor 1401 and the communication interface 1402 are coupled to each other. It may be understood that the communication interface 1402 may be a transceiver or an input/output interface. The processor 1401 and the communication interface 1402 may implement any one of the foregoing communication methods, for example, any one of the communication methods in FIG. 7 and FIG. 9 to FIG. 12. Correspondingly, the communication apparatus 1400 may also implement a function of the communication apparatus 1300. Optionally, the communication apparatus 1400 may further include a memory 1403, configured to store instructions executed by the processor 1401, store input data required by the processor 1401 to run the instructions, or store data generated after the processor 1401 runs the instructions. Optionally, the memory 1403 and the processor 1401 may be coupled.

The processor 1401 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

In a first possible embodiment, the communication apparatus 1400 may be configured to implement a function of the foregoing first IAB node, and correspondingly may also implement steps performed by the first IAB node. In a second possible embodiment, the communication apparatus 1400 may be configured to implement a function of the foregoing second IAB node, and correspondingly may also implement steps performed by the second IAB node. In a third possible embodiment, the communication apparatus 1400 may be configured to implement a function of the foregoing network device, and correspondingly may also implement steps performed by the network device.

An embodiment of this application provides a communication system. The communication system includes any one of the foregoing first IAB node and second IAB node. The first IAB node is, for example, the first IAB node in any one of FIG. 7 and FIG. 9 to FIG. 12, and the second IAB node is, for example, the second IAB node in any one of FIG. 7 and FIG. 9 to FIG. 12. For functions of the first IAB node and the second IAB node, refer to the foregoing descriptions.

An embodiment of this application provides a communication system. The communication system includes any one of the foregoing first IAB node, second IAB node, and network device. The first IAB node is, for example, the first IAB node in any one of FIG. 7 and FIG. 9 to FIG. 12, the second IAB node is, for example, the second IAB node in any one of FIG. 7 and FIG. 9 to FIG. 12, and the network device is, for example, the network device in any one of FIG. 7 or FIG. 12. For functions of the first IAB node, the second IAB node, and the network device, refer to the foregoing descriptions.

An embodiment of this application provides a chip system. The chip system includes a processor and an interface. The processor is configured to invoke instructions from the interface and run the instructions; and when executing the instructions, the processor implements any one of the foregoing communication methods, for example, any one of the foregoing communication methods in FIG. 7 and FIG. 9 to FIG. 12.

An embodiment of this application provides a computer-readable storage medium. The computer-readable storage medium is configured to store a computer program or instructions; and when the computer program or the instructions are run, any one of the foregoing communication methods, for example, any one of the foregoing communication methods in FIG. 7 and FIG. 9 to FIG. 12, is implemented.

An embodiment of this application provides a computer program product including instructions; and when the computer program product is run on a computer, any one of the foregoing communication methods, for example, any one of the foregoing communication methods in FIG. 7 and FIG. 9 to FIG. 12, is implemented.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a base station or a terminal. Certainly, the processor and the storage medium may alternatively exist in the base station or the terminal as discrete components.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first integrated access backhaul IAB node, wherein the method comprises:
receiving first information, wherein the first information comprises a first random access resource; and
sending, by a mobile terminal MT of the first IAB node, a first random access request to a second IAB node on the first random access resource, wherein the first random access request is used by the MT of the first IAB node to request to access a distributed unit DU of the second IAB node, and the second IAB node is a child node of the first IAB node.

2. The method according to claim 1, wherein before the sending, by a mobile terminal MT of the first IAB node, a first random access request to a second IAB node on the first random access resource, the method further comprises:
receiving a second random access request from the second IAB node on a second random access resource, wherein the second random access request is used by an MT of the second IAB node to request to access a DU of the first IAB node, and a time domain resource comprised in the second random access resource is different from a time domain resource comprised in the first random access resource.

3. The method according to claim 1 or 2, wherein before the sending, by a mobile terminal MT of the first IAB node, a first random access request to a second IAB node on the first random access resource, the method further comprises:
determining that quality of communication between the first IAB node and the second IAB node meets a first condition; and/or
determining that quality of communication between the first IAB node and a third IAB node meets a second condition, wherein the third IAB node is a parent node of the first IAB node.

4. The method according to claim 3, wherein the first condition comprises:
a first measurement result is greater than or equal to a first threshold, the first measurement result indicates communication quality of a communication link from the second IAB node to the first IAB node, and the first measurement result is a measurement result of the first IAB node; and/or
a second measurement result is greater than or equal to a second threshold, the second measurement result indicates communication quality of a communication link from the first IAB node to the second IAB node, and the second measurement result is a measurement result of the second IAB node.

5. The method according to claim 3 or 4, wherein the second condition comprises:
a third measurement result is less than or equal to a third threshold, the third measurement result indicates communication quality of a communication link from the third IAB node to the first IAB node, and the third measurement result is a measurement result of the first IAB node; and/or
a fourth measurement result is less than or equal to a fourth threshold, the fourth measurement result indicates communication quality of a communication link from the first IAB node to the third IAB node, and the fourth measurement result is a measurement result of the third IAB node; and/or
a beam failure or a communication link fault between the first IAB node and the third IAB node.

6. The method according to any one of claims 1 to 5, wherein before the sending, by a mobile terminal MT of the first IAB node, a first random access request to a second IAB node on the first random access resource, the method further comprises:
receiving first indication information from the second IAB node, the third IAB node, or a network device, wherein the first indication information indicates the MT of the first IAB node to initiate random access to a child node of the first IAB node, the third IAB node is the parent node of the first IAB node, and the child node of the first IAB node comprises the second IAB node; or
determining that the DU of the first IAB node and the second IAB node have completed a random access process.

7. The method according to claim 6, wherein before the receiving first indication information from the second IAB node, the third IAB node, or a network device, the method further comprises:
sending the first measurement result to the second IAB node, the third IAB node, or the network device, wherein the first measurement result indicates the communication quality of the communication link from the second IAB node to the first IAB node, and the first measurement result is the measurement result of the first IAB node; and/or
sending the third measurement result to the second IAB node, the third IAB node, or the network device, wherein the third measurement result indicates the communication quality of the communication link from the third IAB node to the first IAB node, and the third measurement result is the measurement result of the first IAB node.

8. The method according to any one of claims 1 to 7, wherein the first information is received by the first IAB node from the network device or the second IAB node.

9. The method according to claim 8, wherein the first information is carried in configuration information of the MT of the first IAB node or higher layer signaling; or
the first information is carried in a first message, a third message, or a backhaul adaptation protocol control protocol data unit, and both the first message and the third message are messages in the random access process initiated by the MT of the second IAB node to the DU of the first IAB node.

10. A communication method, applied to a second IAB node, wherein the method comprises:
sending first information to a first IAB node, wherein the first information comprises a first random access resource, and the second IAB node is a child node of the first IAB node; and
receiving a first random access request from the first IAB node on the first random access resource, wherein the first random access request is used by an MT of the first IAB node to request to access a DU of the second IAB node.

11. The method according to claim 10, wherein before the sending first information to a first IAB node, the method further comprises:
receiving second information from a network device or a fourth IAB node, wherein the second information comprises the first random access resource, and the fourth IAB node is a parent node of the second IAB node.

12. The method according to claim 10 or 11, wherein before the receiving a first random access request from the first IAB node on the first random access resource, the method further comprises:
receiving third information, wherein the third information comprises a second random access resource; and
receiving a second random access request from the first IAB node on the second random access resource, wherein a time domain resource comprised in the second random access resource is different from a time domain resource comprised in the first random access resource.

13. The method according to any one of claims 10 to 12, wherein before the receiving a first random access request from the first IAB node on the first random access resource, the method further comprises:
sending first indication information to the first IAB node, wherein the first indication information indicates the MT of the first IAB node to initiate random access to the second IAB node.

14. The method according to claim 13, wherein before the receiving a first random access request from the first IAB node on the first random access resource, the method further comprises:
determining that quality of communication between the first IAB node and the second IAB node meets a first condition; and/or
determining that quality of communication between the first IAB node and a third IAB node meets a second condition, wherein the third IAB node is a parent node of the first IAB node.

15. The method according to claim 14, wherein the first condition comprises:
a first measurement result is greater than or equal to a first threshold, the first measurement result indicates communication quality of a communication link from the second IAB node to the first IAB node, and the first measurement result is a measurement result of the first IAB node; and/or
a second measurement result is greater than or equal to a second threshold, the second measurement result indicates communication quality of a communication link from the first IAB node to the second IAB node, and the second measurement result is a measurement result of the second IAB node.

16. The method according to claim 14 or 15, wherein the second condition comprises:
a third measurement result is less than or equal to a third threshold, the third measurement result indicates communication quality of a communication link from the third IAB node to the first IAB node, and the third measurement result is a measurement result of the first IAB node; and/or
a fourth measurement result is less than or equal to a fourth threshold, the fourth measurement result indicates communication quality of a communication link from the first IAB node to the third IAB node, and the fourth measurement result is a measurement result of the third IAB node; and/or
a beam failure or a communication link fault between the first IAB node and the third IAB node.

17. The method according to claim 13, wherein before the sending first indication information to the first IAB node, the method further comprises:
receiving second indication information from a third IAB node or the network device, wherein the second indication information indicates the DU of the second IAB node to establish a connection to a parent node of the second IAB node, the third IAB node is a parent node of the first IAB node, and the parent node of the second IAB node comprises the first IAB node.

18. The method according to any one of claims 10 to 17, the first information is carried in a first message, a third message, or a backhaul adaptation protocol control protocol data unit, and both the first message and the third message are messages in a random access process initiated by an MT of the second IAB node to a DU of the first IAB node.

19. A communication method, applied to a network device, wherein the method comprises:
sending first information to a first IAB node, wherein the first information comprises a first random access resource, the first random access resource is used by an MT of the first IAB node to initiate random access to a DU of a second IAB node, and the second IAB node is a child node of the first IAB node; or
sending second information to a second IAB node, wherein the second information comprises a first random access resource, the first random access resource is used by a DU of the second IAB node to receive a first random access request from an MT of the first IAB node, and the second IAB node is a child node of the first IAB node.

20. The method according to claim 19, wherein the method further comprises:
sending first indication information to the first IAB node, wherein the first indication information indicates the MT of the first IAB node to initiate random access to a child node of the first IAB node, and the child node of the first IAB node comprises the second IAB node.

21. The method according to claim 20, wherein before the sending first indication information to the first IAB node, the method further comprises:
determining that quality of communication between the first IAB node and the second IAB node meets a first condition; and/or
determining that quality of communication between the first IAB node and a third IAB node meets a second condition, wherein the third IAB node is a parent node of the first IAB node.

22. The method according to claim 21, wherein the first condition comprises:
a first measurement result is greater than or equal to a first threshold, the first measurement result indicates communication quality of a communication link from the second IAB node to the first IAB node, and the first measurement result is a measurement result of the first IAB node; and/or
a second measurement result is greater than or equal to a second threshold, the second measurement result indicates communication quality of a communication link from the first IAB node to the second IAB node, and the second measurement result is a measurement result of the second IAB node.

23. The method according to claim 21 or 22, wherein the second condition comprises:
a third measurement result is less than or equal to a third threshold, the third measurement result indicates communication quality of a communication link from the third IAB node to the first IAB node, and the third measurement result is a measurement result of the first IAB node; and/or
a fourth measurement result is less than or equal to a fourth threshold, the fourth measurement result indicates communication quality of a communication link from the first IAB node to the third IAB node, and the fourth measurement result is a measurement result of the third IAB node; and/or
a beam failure or a communication link fault between the first IAB node and the third IAB node.

24. The method according to any one of claims 19 to 23, wherein the first information is carried in configuration information of the MT of the first IAB node or higher layer signaling.

25. A communication apparatus, comprising:
a receiving module, configured to receive first information, wherein the first information comprises a first random access resource; and
a sending module, configured to send, by an MT of the apparatus, a first random access request to a second IAB node on the first random access resource, wherein the first random access request is used by the MT of the apparatus to request to access a distributed unit DU of the second IAB node, and the second IAB node is a child node of the apparatus.

26. A communication apparatus, comprising:
a sending module, configured to send first information to a first IAB node, wherein the first information comprises a first random access resource, and the apparatus is a child node of the first IAB node; and
a receiving module, configured to receive a first random access request from the first IAB node on the first random access resource, wherein the first random access request is used by an MT of the first IAB node to request to access a DU of the apparatus.

27. A communication apparatus, comprising:
a sending module, configured to send first information to a first IAB node, wherein the first information comprises a first random access resource, the first random access resource is used by an MT of the first IAB node to initiate random access to a DU of a second IAB node, and the second IAB node is a child node of the first IAB node; or
a sending module, configured to send second information to a second IAB node, wherein the second information comprises a first random access resource, the first random access resource is used by a DU of the second IAB node to receive a first random access request from an MT of the first IAB node, and the second IAB node is a child node of the first IAB node.

28. A communication system, comprising:
the apparatus according to claim 25 and the apparatus according to claim 26; or
the apparatus according to claim 25, the apparatus according to claim 26, and the apparatus according to claim 27.

29. A communication apparatus, comprising a processor and a communication interface, wherein the communication interface is configured to receive a signal from an apparatus other than the communication apparatus and transmit the signal to the processor, or send a signal from the processor to an apparatus other than the communication apparatus, and the processor is configured to implement the method according to any one of claims 1 to 24 through a logic circuit or by executing code instructions.

30. A computer-readable storage medium, wherein the storage medium stores a computer program or instructions, and when the computer program or the instructions are executed by a communication apparatus, the method according to any one of claims 1 to 24 is implemented.
